(19) Europäisches Patentamt
European Patent Office
Office européen des brevets

(11) EP 0 521 040 B2

(12) # NEUE EUROPÄISCHE PATENTSCHRIFT

(45) Veröffentlichungstag und Bekanntmachung des Hinweises auf die Entscheidung über den Einspruch:
**20.05.1998 Patentblatt 1998/21**

(45) Hinweis auf die Patenterteilung:
**02.08.1995 Patentblatt 1995/31**

(21) Anmeldenummer: **91906189.5**

(22) Anmeldetag: **06.03.1991**

(51) Int. Cl.6: **B05D 7/16**, B05D 5/06

(86) Internationale Anmeldenummer:
**PCT/EP91/00416**

(87) Internationale Veröffentlichungsnummer:
**WO 91/14513 (03.10.1991 Gazette 1991/23)**

(54) **VERFAHREN ZUR HERSTELLUNG EINER MEHRSCHICHTIGEN REPARATURLACKIERUNG**
PROCESS FOR PRODUCING A MULTICOAT REPAIR ENAMEL FINISH
PROCEDE DE PRODUCTION D'UN ENDUIT DE LAQUE MULTICOUCHE DE REPARATION

(84) Benannte Vertragsstaaten:
**AT BE CH DE DK ES FR GB IT LI NL SE**

(30) Priorität: **21.03.1990 DE 4009000**

(43) Veröffentlichungstag der Anmeldung:
**07.01.1993 Patentblatt 1993/01**

(73) Patentinhaber:
**BASF Coatings Aktiengesellschaft**
**48165 Münster (DE)**

(72) Erfinder: **MAYER, Bernd**
**D-4400 Münster (DE)**

(74) Vertreter: **Münch, Volker, Dr.**
**Dres. Fitzner, Münch & Jungblut**
**Kaiserswerther Strasse 74**
**40878 Ratingen (DE)**

(56) Entgegenhaltungen:
**EP-A- 320 552**
**EP-A- 507 819**
**EP-A- 0 010 007**
**EP-A- 0 104 779**
**EP-A- 0 238 037**
**EP-A- 0 287 144**
**EP-A- 0 319 918**
**EP-B- 178 096**
**WO-A-90/06186**
**US-A- 4 539 258**
**US-A- 4 822 685**

- **Glasurit-Handbuch Lacke und Farben, 1984, Seiten 523 bis 543**
- **Merkblatt "Technischer Service" Herberts GmbH, Sept. 1987**
- **Kittel, Lehrbuch der Lacke und Beschichtungen, 1973**

EP 0 521 040 B2

## Beschreibung

Gegenstand der vorliegenden Erfindung ist ein Verfahren zur Herstellung einer mehrschichtigen Reparaturlackierung, bei dem

1.) die Schadstelle für das Auftragen einer Reparaturlackierung durch Reinigen, Schleifen und ggf. Aufbringen eines Spachtel- und/oder Füllermaterials vorbereitet wird,
2.) auf die vorbereitete Schadstelle sowie auf den angrenzenden, mit der Altlackierung versehenen Flächen ein Überzugsmittel aufgebracht wird,
3.) aus dem in Stufe (2) aufgebrachten Überzugsmittel ein Polymerfilm gebildet wird,
4.) auf der so erhaltenen Überzugsschicht eine Metallpigmente und/oder Effektpigmente enthaltene Basisbeschichtungszusammensetzung mit einer derartigen Schichtdicke aufgebracht wird, daß die Basisschicht im Bereich der Schadstelle deckend und im angrenzenden, mit dem Überzugsmittel der Stufe (2) beschichteten Bereich der Altlackierung auslaufend ist,
5.) aus der in Stufe (4) aufgebrachten Zusammensetzung ein Polymerfilm gebildet wird,
6.) auf der so erhaltenen Basisschicht, auf den ggf. nicht mit einer Basisschicht überzogenen Teilen der Überzugsschicht der Stufe (2) und ggf. auf der angrenzenden Altlackierung eine geeignete transparente Deckbeschichtungszusammensetzung aufgebracht wird und anschließend
7.) die Deckschicht ggf. zusammen mit der Basisschicht und ggf. zusammen mit der in der Stufe (2) erhaltenen Überzugsschicht bei Temperaturen zwischen Umgebungstemperatur und 140 °C, bevorzugt bei Temperaturen von unter 100 °C und besonders bevorzugt bei Temperaturen von unter 80 °C getrocknet wird.

Gegenstand der Erfindung ist ebenfalls ein Verfahren nach dem Oberbegriff des Anspruchs 6.

Die Ausbesserung von Schadstellen einer Lackierung erfolgt üblicherweise durch gründliches Reinigen der Schadstelle, Schleifen, ggf. Spachteln und Aufbringen eines Reparaturfüllers auf der Schadstelle.
Anschließend erfolgt eine Lackierung der Schadstelle. Häufig sind allerdings bei einer derartigen Teillackierung Farbtondifferenzen zu erwarten. Insbesondere die Ausbesserung von Metalleffektlacken ist problematisch, da Farbton und Helligkeit des Effektes stark von der Verarbeitungsweise abhängen. Hier spielen u.a. die Düsenweite der Spritzpistole und der Spritzdruck eine entscheidende Rolle. Auch die Art der Verdünnung und die Spritzviskosität beeinflussen Farbton und Effekt.

Wenn bei einer derartigen Teillackierung Farbtondifferenzen zu erwarten sind und keine Abgrenzung der Fläche durch Zierleisten oder Kanten gegeben ist, kann es zweckmäßig und wirtschaftlich sein,
die Farbtondifferenzen durch sogenanntes auslaufendes Beispritzen in das angrenzende Teil auszugleichen.
Wie im den Oberbegriff der unabhängigen Ansprüche der Vorliegenden Erfindung bildenden Glasurit-Handbuch, Farben und Lacke, 11. Auflage, Curt R. Vincentz Verlag Hannover 1984, Kapitel 7 "PKW-Reparaturlackierung", Seite 523 ff. beschrieben, werden hierzu im Falle der Metallic-Mehrschichtlackierungen nach den oben beschriebenen Vorarbeiten wie Reinigen, Schleifen, Spachteln usw. die Reparaturfläche und die angrenzenden Teile mit einem konventionellen, d. h. lösemittelhaltigen, überverdünnten Klarlack mittels Spritzapplikation überlackiert. Dabei ist es wichtig, daß dieser Klarlack auch über die Reparaturstelle, d. h. die Füllerflecken, aufgespritzt wird. Als Klarlack werden hierzu übliche konventionelle Klarlacke, beispielsweise 2-Komponentenklarlacke auf Basis von hydroxylgruppenhaltigen Acrylatcopolymerisaten als Bindemittel und Isocyanaten als Vernetzer eingesetzt.
Nach Antrocknung des so hergestellten Klarlacküberzuges bei Umgebungstemperatur oder leicht erhöhter Temperatur wird die Schadstelle deckend und in die angrenzenden Flächen hinein auslaufend, d. h. mit vom Schadstellenrand nach außen allmählich auf 0 µm abnehmende Schichtdicke, mit Effektlacken, wie Metallic-Basislacken, mittels Spritzapplikation überlackiert. Die Randzone kann ggf. bei schwierigen Farbtönen mit niedrigerem Spritzdruck überspritzt werden.
Für dieses Ausbessern der Schadstelle werden üblicherweise festkörperarme, konventionelle Effektlacke eingesetzt.
Nach Antrocknung des so hergestellten Basislack-Überzuges werden die Reparaturstelle und die angrenzenden Teile ganz mit dem oben beschriebenen Klarlack überspritzt und nach einer ggf. notwendigen Ablüftzeit gemeinsam mit den vorher aufgebrachten Schichten bei Temperaturen von vorzugsweise zwischen Umgebungstemperatur und 100 °C getrocknet. Da die in diesem Verfahren eingesetzten Metallic-Basislacke einen extrem hohen Anteil von bis zu 90 % an organischen Lösungsmitteln enthalten, ist aus wirtschaftlichen Gründen sowie zur Verbesserung der Arbeitssicherheit (Brandschutz) und zur Verringerung der Umweltbelastung der Einsatz wäßriger Basislacke wünschenswert. Insbesondere wenn hierzu die bekannten wäßrigen Basislacke direkt auf einen wäßrigen Reparaturfüller appliziert werden, ist eine Ausbesserung der Schadstellen nicht zufriedenstellend möglich, da dies zu Farbton- und Effektveränderungen im Bereich der Schadstelle führt. Auch die Ausbesserung der Schadstellen mit der oben beschriebenen Beispritzmethode ist nicht zufriedenstellend möglich. Das hierbei notwendige auslaufende Spritzen in das angrenzende Teil führt nämlich regelmäßig zu einer veränderten Orientierung der effektgebenden Pigmente und somit zu Farbtonveränderungen und einem ungünstigen metallischen Effekt in den Randzonen (z. B. Übergangsbereich zwischen Effektbasislack und Klarlack), wodurch die Reparaturstelle wiederum deutlich sichtbar wird. Weiterhin ist aus der EP-B-104 779 ein Verfahren zur Reparaturlackierung auf weichen Kunststoffsubstraten bekannt, bei dem auf die mit Instandsetzungsmaterial versehene Kunststoffoberfläche eine wäßrige Polyurethanüberzugsmasse aufgebracht und getrocknet wird und anschließend in einem weiteren Schritt konventionelle, d. h. lösemittelhaltige Farbüberzugsmittel aufgebracht werden. Die wäßrige Polyurethanüberzugsmasse dient dabei zur Herstellung einer Lösemittelsperrschicht, die die durch den Angriff von den in den Farbüberzugsmitteln enthaltenen Lösungsmitteln hervorgerufenen Schäden, wie z. B. Blasenbildung, verhindern soll.

Aus der EP-B-10 007 ist ein Verfahren zur Reparaturlackierung auf Fahrzeugkarosserien bekannt, bei dem man ebenfalls zunächst eine Lösemittelsperrschicht auf den Untergrund aufbringt, die Schutzschicht trocknet und anschließend lösemittelhaltige Autoreparaturlacke aufbringt. Die Sperrschicht wird dabei durch Aufbringen einer alkoholischen oder wäßrig-alkonolischen Lösung eines Polyamidharzes hergestellt. Diese Sperrschicht soll analog zum Verfahren der EP-E-104 779 verhindern, daß der Untergrund durch die in den nachfolgend aufgebrachten Autoreparaturlacken enthaltenen Lösemittel angegriffen wird.

Aus der EP-A-319 918 ist ein Verfahren zur Herstellung einer mehrschichtigen Lackierung bekannt, bei dem zunächst ein wäßriges, pigmentiertes Überzugsmittel, dann eine Metallpigmente und oder Effektpigmente enthaltende wäßrige Basisbeschichtungszusammensetzung und schließlich eine transparente Deckbeschichtungszusammensetzung aufgebracht werden. Es handelt sich bei dem aus der EP-A-319 918 bekannten Verfahren nicht um ein Verfahren zur Herstellung einer Reparaturlackierung, vielmehr wird ein gleichmäßiger Untergrund, der zuvor gereinigt wurde, mit einer mehrschichtigen Lackierung versehen. Die EP-A-319 918 enthält weder Angaben noch Hinweise, wie die der vorliegenden Erfindung zugrundeliegende Aufgabe der Vermeidung der Randzonenmarkierung gelöst werden kann.

Schließlich ist aus der EP-A-320 552 ein Verfahren zur Herstellung einer mehrschichtigen Lackierung bekannt, bei dem auf das mit einem Füller versehene Substrat zunächst eine wäßrige, bevorzugt Metallicpigmente enthaltende Überzugszusammensetzung aufgebracht und getrocknet wird, ehe ein üblicher Wasserbasislack und anschließend ein Klarlack aufgebracht werden. Durch die Applikation der wäßrigen Überzugszusammensetzung vor der Basecoat Clearcoat-Beschichtung soll eine Verbesserung des Metalliceffektes, insbesondere eine Verbesserung der Aufsichthelligkeit, auf einheitlichen Untergründen, insbesondere bei der Erstlackierung, erreicht werden. Die Problematik der Farbtonveränderungen in den Randzonen bei Reparaturlackierungen wird dagegen nicht beschrieben.

Der vorliegenden Erfindung liegt die Aufgabe zugrunde, ein Verfahren zur Herstellung einer mehrschichtigen Reparaturlackierung zur Verfügung zu stellen, durch das Schadstellen an einer mehrschichtigen Metalliclackierung so ausgebessert werden können, daß die Reparaturstelle möglichst wenig oder gar nicht sichtbar ist, d. h. daß Farbtonveränderungen, Wolkenbildung u. a. in den Randzonen (d. h. Übergangsbereich Reparaturfüller Altlackierung sowie Übergangsbereich Basislack/Klarlack) vermieden werden. Weiterhin sollte eine gute Haftung zwischen der Altlackierung bzw. den für die Ausbesserung der Schadstelle verwendeten Materialien und der Basislackschicht gewährleistet sein. Insbesondere sollte aber aus wirtschaftlichen Gründen, zur Verringerung der Umweltbelastung beim Trocknen der Beschichtungen sowie aus Gründen der Arbeitssicherheit (Brandschutz) gewährleistet sein, daß auch bei Verwendung von wäßrigen bzw. wasserverdünnbaren Basislacken diese Anforderungen erfüllt werden. Diese Aufgabe wird gemäß der Erfindung, durch ein Verfahren der eingangs, genannten Art gelöst, das dadurch gekennzeichnet ist, daß

I.) in der Stufe (2) ein wäßriges Überzugsmittel, enthaltend

a) 5 bis 50 Gew.-%, bezogen auf das Gesamtgewicht des Überzugsmittels, mindestens eines wasserverdünnbaren oder wasserdispergierbaren filmbildenden Materials,
b) 0 bis 20 Gew.-%, bezogen auf das Gesamtgewicht des Überzugsmittels, mindestens eines organischen Lösungsmittels und
c) ggf. übliche Hilfs- und Zusatzstoffe,
aufgebracht wird, wobei die Trockenfilmschichtdicke dieses wäßrigen Überzugsmittels im Bereich der Schadstelle zwischen 2 und 50 $\mu$m beträgt und dieses wäßrige Überzugsmittel keine Metallpigmente und keine nichtmetallischen Effektpigmente enthält und

II.) in der Stufe (4) eine wäßrige Basisbeschichtungszusammensetzung aufgebracht wird. Alternativ hierzu wird die gestellte Aufgabe erfindungsgemäß auch durch ein Verfahren nach Anspruch 6 gelöst.

Zweckmäßige Weiterbildungen der Erfindung sind in den abhängigen Ansprüchen beschrieben.

Überraschenderweise können mit dem erfindungsgemäßen Verfahren Schadstellen an einer mehrschichtigen Metalliclackierung so ausgebessert werden, daß die Reparaturstelle wenig oder nicht sichtbar ist. Insbesondere werden die bei den herkömmlichen Reparaturverfahren häufig beobachteten Effekte in den Randzonen, wie z. B. Farbtonveränderungen Wolkenbildung u. ä. vermieden. Diese Probleme treten weder im Übergangsbereich zwischen der ggf. mit einem Füller- und oder Spachtelmaterial versehen Schadstelle und dem Bereich der angrenzenden Altlackierung

noch im Übergangsbereich zwischen der neu aufgebrachten Reparatur-Metallic-Basislackschicht und der Altlackierung auf. Von entscheidender Bedeutung ist dabei, daß diese hervorragenden Ergebnisse unter Verwendung von wäßrigen Reparatur-Metallic-Basislacken erzielt werden können, so daß vor allem die Umweltbelastung beim Trocknen der Lackfilme gering gehalten wird. Aber auch im Hinblick auf Aspekte der Arbeitssicherheit und der Wirtschaftlichkeit dieses Verfahrens ist der Einsatz wäßriger Metallic-Basislacke von großer Bedeutung.
Schließlich wird durch das erfindungsgemäße Verfahren eine gute Haftung zwischen der Altlackierung bzw. den für die Ausbesserung de Schadstelle verwendeten Materialien und der Basisschicht gewährleistet. Das erfindungsgemäße Verfahren zur Herstellung einer mehrschichtigen Reparaturlackierung kann auf den unterschiedlichsten Substraten angewendet werden. Dabei ist es unerheblich, ob es sich um konventionelle oder wasserverdünnbare Aufbauten handelt, die Schadstellen aufweisen.
Zur Durchführung des erfindungsgemäßen Verfahrens wird die Schadstelle zunächst wie üblich durch gründliches Reinigen, Schleifen, ggf. Spachteln und Füllern vorbereitet. Die jeweils erforderlichen Vorarbeiten richten sich nach der Art der zu beseitigenden Schäden sowie der geforderten Qualität der Reparaturlackierung. Sie sind bekannt vgl. z. B. Glasurit Handbuch, Farben und Lacke, 11. Auflage, Curt R. Vincentz Verlag, Hannover 1984. Kapitel 7: "PKW-Reparaturlackierung") und brauchen daher hier nicht näher erläutert zu werden. Für diese Vorarbeiten geeignet sind sowohl konventionelle als auch wasserverdünnbare Grundmaterialien, wie sie üblicherweise eingesetzt werden.

Aus wirtschaftlichen Gründen sowie zur Verbesserung der Arbeitssicherheit (Brandschutz) und insbesondere zur Verringerung der Umweltbelastung werden zunehmend wasserverdünnbare Grundmaterialien eingesetzt.

Es ist erfindungswesentlich, daß auf die entsprechend vorbereitete Schadstelle sowie darüberhinaus auch auf die angrenzenden Flächen der Altlackierung ein wäßriges oder wasserverdünnbares Überzugsmittel aufgebracht wird und dieses wäßrige Überzugsmittel keine Metallpigmente und keine nichtmetallischen Effektpigmente enthält. Dieses Überzugsmittel wird dabei im Bereich der Schadstelle mit einer Trockenfilmschichtdicke von 2 bis 50 µm, bevorzugt 5 bis 20 µm, appliziert. In den angrenzenden Bereichen der Altlackierung dagegen nimmt die Trockenfilmschichtdicke dieses Überzugsmittel von der Grenze der Schadstelle nach außen hin allmählich bis auf 0 µm ab. Diese Art der Beschichtung mit abnehmender Schichtstärke wird üblicherweise als "auslaufend" bezeichnet. Diese Bezeichnung wird auch im folgenden zur Vereinfachung für die Applikation von Beschichtungen mit allmählich auf 0 µm abnehmender Schichtdicke verwendet. Der Bereich der angrenzenden Altlackierung, der mit diesem Überzugsmittel auslaufend beschichtet wird, hängt von vielen Faktoren, wie beispielsweise der eingesetzten Spritzpistole, dem Spritzdruck, der Art, Größe und Lage der Schadstelle u. ä. ab. Üblicherweise erfolgt die auslaufende Applikation des Überzugsmittels in einem zwischen 1 cm und 1 m breiten Bereich der Altlackierung um die Schadstelle herum. Der jeweils optimale zu beschichtende Bereich der Altlackierung kann aber vom Fachmann anhand weniger Routineversuche leicht ermittelt werden.

Neben dieser Variante des auslaufenden Spritzens des Überzugsmittels ist es auch möglich, dieses Überzugsmittels auf die Schadstelle sowie den gesamten angrenzenden Bereich der Altlackierung bis zum Erreichen einer Begrenzung, wie beispielsweise einer Kante oder Leiste, mit einer Trockenfilmschichtdicke von 2 bis 50 µm, bevorzugt 5 bis 20 µm, aufzubringen. Dies ist bei Metallic-Farbtönen von Bedeutung, bei denen üblicherweise Probleme, z. B. aufgrund eines nur geringen Deckvermögens der Basislacke, auftreten. Insbesondere dann ist es von Vorteil, daß die Überzugsmittel farbgebende Pigmente enthalten, die eine verbesserte Farbtonangleichung an die Altlackierung ermöglichen. Die in dem erfindungsgemäßen Verfahren eingesetzten wäßrigen oder wasserverdünnbaren Überzugsmittel enthalten mindestens ein wasserverdünnbares oder wasserdispergierbares Bindemittel, bevorzugt in Mengen von 5 bis 50 Gew.-%, besonders bevorzugt in Mengen von 10 bis 30 Gew.-%, jeweils bezogen auf das Gesamtgewicht des Überzugsmittels. Diese Bindemittel können zum Beispiel aus der Gruppe der Acrylat-, Polyurethan- und oder Polyesterharze ausgewählt sein. Sie können ggf. durch funktionelle Gruppen modifiziert sein, die die Eigenschaften der Harze gezielt steuern und/oder die zur Vernetzung der Harze mit Härtern dienen. Die Härter können dabei dem in Rede stehenden wäßrigen oder wasserverdünnbarem Überzugsmittel zugesetzt werden, sie können aber auch im Basislack und/oder in der letzten Klarlackschicht enthalten sein.

Als Bindemittel für diese wäßrigen bzw. wasserverdünnbaren Überzugsmittel geeignet sind beispielsweise die in der DE-OS 3545618, DE-OS 3739332, US-PS 4,719,132, EP-A-89497, DE-OS 3210051, DE-OS 2624442, US-PS 4,558,090, US-PS 4,489,135, EP-A-38127, DE-OS 3628124, EP-A-158099, DE-OS 2926584, EP-A-195931 und DE-OS 3321180 beschriebenen Polyurethanharze.

Bevorzugt werden wasserverdünnbare, Harnstoffgruppen enthaltende Polyurethanharze eingesetzt, die ein zahlenmittleres Molekulargewicht (Bestimmung: gelpermeationschromatographisch mit Polystyrol als Standard) von 1000 bis 25.000, vorzugsweise vorzugsweise 1500 bis 20.000 und eine Säurezahl von 5 bis 70 mg KOH/g, vorzugsweise 10 bis 30 mg KOH/g, aufweisen und durch Umsetzung, vorzugsweise Kettenverlängerung, von Isocyanatgruppen aufweisenden Präpolymeren mit Polyaminen und/oder Hydrazin herstellbar sind.

Die Herstellung des isocyanatgruppenhaltigen Präpolymeren kann durch Reaktion von Polyalkoholen mit einer Hydroxylzahl von 10 bis 1800, bevorzugt 50 bis 500 mg KOH/g, mit überschüssigen Polyisocyanaten bei Temperaturen bis zu 150 °C, bevorzugt 50 bis 130 °C, in organischen Lösemitteln, die nicht mit Isocyanaten reagieren können, erfolgen. Das Äquivalenzverhältnis von NCO- zu OH-Gruppen liegt zwischen 1,5 zu 1,0 und 1,0 zu 1,0, bevorzugt zwischen

1,4 und 1,2 zu 1. Die zur Herstellung des Präpolymeren eingesetzten Polyole können niedrigmolekular und/oder hochmolekular sein und sie können reaktionsträge anionische Gruppen enthalten.

Um die Härte des Polyurethans zu erhöhen, kann man niedrigmolekulare Polyole einsetzen. Sie haben ein Molekulargewicht von 60 bis zu etwa 400, und können aliphatische, alicyclische oder aromatische Gruppen enthalten. Es werden dabei Mengen bis zu 30 Gew.-% der gesamten Polyol-Bestandteile, bevorzugt etwa 2 bis 20 Gew.-%, eingesetzt. Vorteilhaft sind die niedermolekularen Polyole mit bis zu etwa 20 Kohlenstoffatomen je Molekül, wie Ethylenglykol, Diethylenglykol, Triethylenglykol, 1,2-Propandiol, 1,3-Propandiol, 1,4-Butandiol, 1,2-Butylenglykol, 1,6-Hexandiol, Trimethylolpropan, Rizinusöl oder hydriertes Rizinusöl, Ditrimethylolpropanether, Pentaerythrit, 1,2-Cyclohexandiol, 1,4-Cyclohexandi-methanol, Bisphenol A, Bisphenol F, Neopentylglykol, Hydroxipivalinsäure-neopentylglykolester, hydroxiethyliertes oder hydroxipropyliertes Bisphenol A, hydriertes Bisphenol A und deren Mischungen. Um ein NCO-Präpolymeres hoher Flexibilität zu erhalten, sollte ein hoher Anteil eines überwiegend linearen Polyols mit einer bevorzugten Hydroxylzahl von 30 bis 150 mg KOH/g zugesetzt werden. Bis zu 97 Gew.-% des gesamten Polyols können aus gesättigten und ungesättigten Polyestern und/oder Polyethern mit einer Molmasse Mn von 400 bis 5000 bestehen. Als hochmolekulare Polyole sind geeignet aliphatische Polyetherdiole der allgemeinen Formel $H-(-0-(-CHR)_n-)_m-OH$, in der R = Wasserstoff oder ein niedriger, ggf. mit verschiedenen Substituenten versehener Alkylrest ist, wobei n = 2 bis 6, bevorzugt 3 bis 4 und m = 2 bis 100, bevorzugt 5 bis 50, ist. Beispiele sind lineare oder verzweigte Polyetherdiole, wie Poly(oxiethylen)glykole, Poly(oxipropylen)glykole und/oder Poly(oxibutylen)glykole, Die ausgewählten Polyetherdiole sollen keine übermäßigen Mengen an Ethergruppen einbringen, weil sonst die gebildeten Polymere in Wasser anquellen. Die bevorzugten Polyetherdiole sind Poly(oxipropylen)glykole im Molmassenbereich Mn von 400 bis 3000. Polyesterdiole werden durch Veresterung von organischen Dicarbonsäuren oder ihren Anhydriden mit organischen Diolen hergestellt oder leiten sich von einer Hydroxicarbonsäure oder einem Lacton ab. Um verzweigte Polyesterpolyole herzustellen, können in geringem Umfang Polyole oder Polycarbonsäuren mit einer höheren Wertigkeit eingesetzt werden. Die Dicarbonsäuren und Diole können lineare oder verzweigte aliphatische, cycloaliphatische oder aromatische Dicarbonsäuren oder Diole sein.

Die zur Herstellung der Polyester verwendeten Diole bestehen beispielsweise aus Alkylenglykolen, wie Ethylenglykol, Propylenglykol, Butylenglykol, Butandiol-1,4, Hexandiol-1,6, Neopentylglykol und anderen Diolen, wie Dimethylolcyclohexan. Die Säurekomponente des Polyesters besteht in erster Linie aus niedermolekularen Dicarbonsäuren oder ihren Anhydriden mit 2 bis 30, bevorzugt 4 bis 18 Kohlenstoffatomen im Molekül. Geeignete Säure sind beispielsweise o-Phthalsäure, Isophthalsäure, Terephthalsäure, Tetrahydrophthalsäure, Cyclohexandicarbonsäure, Bernsteinsäure, Adipinsäure, Azelainsäure, Sebazinsäure, Maleinsäure, Fumarsäure, Glutarsäure, Hexachlorheptandicarbonsäure, Tetrachlorphthalsäure und/oder dimerisisierte Fettsäuren. Anstelle dieser Säuren können auch ihre Anhydride, soweit diese existieren, verwendet werden. Bei der Bildung von Polyesterpolyolen können auch kleinere Mengen an Carbonsäuren mit 3 oder mehr Carboxylgruppen, beispielsweise Trimellithsäureanhydrid oder das Addukt von Maleinsäureanhydrid an ungesättigte Fettsäuren anwesend sein. Erfindungsgemäß werden auch Polyesterdiole eingesetzt, die durch Umsetzung eines Lactons mit einem Diol erhalten werden. Sie zeichnen sich durch die Gegenwart einer endständigen Hydroxylgruppe und wiederkehrende Polyesteranteile der Formel $-(-CO-(CHR)_n-CH_2-0-)-$ aus. Hierbei ist n bevorzugt 4 bis 6 und der Substituent R Wasserstoff, ein Alkyl-, Cycloalkyl- oder Alkoxi-Rest. Kein Substituent enthält mehr als 12 Kohlenstoffatome. Die gesamte Anzahl der Kohlenstoffatome im Substituenten übersteigt nicht 12 pro Lactonring. Beispiele hierfür sind Hydroxicapronsäure, Hydroxibuttersäure, Hydroxidecansäure und/oder Hydroxistearinsäure.

Das als Ausgangsmaterial verwendete Lacton kann durch die folgende allgemeine Formel dargestellt werden

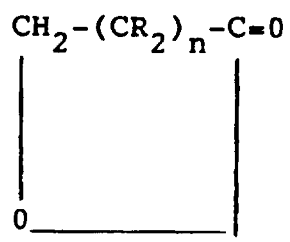

in der n und R die bereits angegebene Bedeutung haben. Für die Herstellung der Polyesterdiole wird das unsubstituierte ε-Caprolacton, bei dem n den Wert 4 hat und alle R-Substituenten Wasserstoff sind, bevorzugt. Die Umsetzung mit Lacton wird durch niedermolekulare Polyole, wie Ethylenglykol, 1,3-Propandiol, 1,4-Butandiol, Dimethylolcyclohexan gestartet. Es können jedoch auch andere Reaktionskomponenten, wie Ethylendiamin, Alkyldialkanolamine oder auch Harnstoff mit Caprolacton umgesetzt werden.

Als höhermolekulare Diole eigenen sich auch Polylactamdiole, die durch Reaktion von beispielsweise ε-Caprolactam mit niedermolekularen Diolen hergestellt werden. Als typische multifunktionelle Isocyanate werden verwendet aliphatische, cycloaliphatische und/oder aromatische Polyisocyanate mit mindestens zwei Isocyanatgruppen pro Molekül. Bevorzugt werden die Isomeren oder Isomerengemische von organischen Diisocyanaten. Als aromatische Diisocyanate eignen sich Phenylendiisocyanat, Toluylendiisocyanat, Xylylendiisocyanat, Biphenylendiisocyanat, Naphthylendiisocyanat und Diphenylmethandiisocyanat.
Aufgrund ihrer guten Beständigkeit gegenüber ultraviolettem Licht ergeben (cyclo)aliphatische Diisocyanate Produkte mit geringer Vergilbungsneigung. Beispiele hierfür sind Isophorondiisocyanat, Cyclopentylendiisocyant sowie die Hydrierungsprodukte der aromatischen Diisocyanate, wie Cyclohexylendiisocyanat, Methylcyclohexylendiisocyanat und Dicyclohexylmethandiisocyanat. Als Beispiele für aliphatische Diisocyanate werden Trimethylendiisocyanat, Tetramethylendiisocyanat, Pentamethylendiisocyanat, Hexamethylendiisocyanat, Propylendiisocyanat, Ethylethylendiisocyanat, Dimethylethylendiisocyanat, Methyltrimethylendiisocyanat und Trimethylhexandiisocyanat genannt. Besonders bevorzugt werden als Diisocyanate Isophorondiisocyanat und Dicyclohexylmethandiisocyanat genannt.
Die zur Bildung des Präpolymeren gebrauchte Polyisocyanat-Komponente kann auch einen Anteil höherwertiger Polyisocyanate enthalten, vorausgesetzt dadurch wird keine Gelbildung verursacht. Als Triisocyanate haben sich Produkte bewährt, die durch Trimerisation oder Oligomerisation von Diisocyanaten oder durch Reaktion von Diisocyanaten mit polyfunktionellen OH- oder NH-Gruppen enthaltenden Verbindungen entstehen. Hierzu gehören beispielsweise das Biuret von Hexamethylendiisocyanat und Wasser, das Isocyanurat des Hexamethylendiisocyanats oder das Addukt von Isophorondiisocyanat an Trimethylolpropan.
Die mittlere Funktionalität kann gegebenenfalls durch Zusatz von Monoisocyanaten gesenkt werden.
Beispiele für solche kettenabbrechenden Monoisocyanate sind Phenylisocyanat, Cyclohexylisocyanat und Stearylisocyanat. Polyurethane sind im allgemeinen nicht mit Wasser verträglich, wenn nicht bei ihrer Synthese spezielle Bestandteile eingebaut und/oder besondere Herstellungsschritte vorgenommen werden.
So wird eine so große Säurezahl eingebaut, daß das neutralisierte Produkt stabil in Wasser zu dispergieren ist. Hierzu dienen Verbindungen, die zwei mit Isocyanatgruppen reagierende H-aktive Gruppen und mindestens eine zur Anionenbildung befähigte Gruppe enthalten. Geeignete, mit Isocyanatgruppen reagierende Gruppen sind insbesondere Hydroxylgruppen sowie primäre und/oder sekundäre Aminogruppen.
Gruppen, die zur Anionenbildung befähigt sind, sind Carboxyl-, Sulfonsäure und/oder Phosphonsäuregruppen. Bevorzugt werden Carbonsäure- oder Carboxylatgruppen verwendet. Sie sollen so reaktionsträge sein, daß die Isocyanatgruppen des Diisocyanats vorzugsweise mit den anderen gegenüber Isocyanatgruppen reaktiven Gruppen des Moleküls reagieren. Es werden dazu Alkansäuren mit zwei Substituenten am $\alpha$-ständigen Kohlenstoffatom eingesetzt. Der Substituent kann eine Hydroxylgruppe, eine Alkylgruppe oder eine Alkylolgruppe sein. Diese Polyole haben wenigstens eine, im allgemeinen 1 bis 3 Carboxylgruppen im Molekül. Sie haben zwei bis etwa 25, vorzugsweise 3 bis 10 Kohlenstoffatome. Beispiele für solche Verbindungen sind Dihydroxipropionsäure, Dihydroxibernsteinsäure und Dihydroxibenzoesäure. Eine besonders bevorzugte Gruppe von Dihydroxialkansäuren sind die $\alpha,\alpha$-Dimethylolalkansäuren, die durch die Strukturformel $RC(CH_2OH)_2COOH$ gekennzeichnet sind, worin R Wasserstoff oder eine Alkylgruppe mit bis zu etwa 20 Kohlenstoffatomen bedeutet. Beispiele für solche Verbindungen sind 2,2-Dimethylolessigsäure, 2,2-Dimethylolpropionsäure, 2,2-Dimethylolbuttersäure und 2,2-Dimethylolpentansäure. Die bevorzugte Dihydroxialkansäure ist 2,2-Dimethylolpropionsäure. Aminogruppenhaltige Verbindungen sind beispielsweise Diaminovaleriansäure, 3,4-Diaminobenzoesäure, 2,4-Diaminotoluolsulfonsäure und 2,4-Diamino-diphenylethersulfonsäure. Das Carboxylgruppen enthaltende Polyol kann 3 bis 100 Gew.-%, vorzugsweise 5 bis 50 Gew.-%, des gesamten Polyolbestandteiles im NCO-Präpolymeren ausmachen. Die durch die Carboxylgruppen-Neutralisation in Salzform verfügbare Menge an ionisierbaren Carboxylgruppen beträgt im allgemeinen wenigstens 0,4 Gew.-%, vorzugsweise wenigstens 0,7 Gew.-%, bezogen auf den Feststoff. Die obere Grenze beträgt etwa 6 Gew.-%. Die Menge an Dihydroxialkansäuren im unneutralisierten Präpolymeren ergibt eine Säurezahl von wenigstens 5, vorzugsweise wenigstens 10. Die obere Grenze der Säurezahl liegt bei 70, vorzugsweise bei 40 mg KOH/g, bezogen auf den Feststoff.
Diese Dihydroxialkansäure wird vor der Umsetzung mit Isocyanaten vorteilhafterweise mindestens anteilweise mit einem tertiären Amin neutralisiert, um eine Reaktion mit den Isocyanaten zu vermeiden.
Die erfindungsgemäß verwendeten NCO-Präpolymeren können durch gleichzeitige Umsetzung des Polyols oder Polyolgemisches mit einem Diisocyanat-Überschuß hergestellt werden. Andererseits kann die Umsetzung auch in vorgeschriebener Reihenfolge stufenweise vorgenommen werden. Beispiele sind in den DE OS 26 24 442 und DE OS 32 10 051 beschrieben. Die Reaktionstemperatur beträgt bis zu 150°C, wobei eine Temperatur im Bereich von 50 bis 130°C bevorzugt wird. Die Umsetzung wird fortgesetzt, bis praktisch alle Hydroxylfunktionen umgesetzt sind.

Das NCO-Präpolymer enthält wenigstens etwa 0,5 Gew.-% Isocyanatgruppen, vorzugsweise wenigstens 1 Gew.-% NCO, bezogen auf Feststoff. Die obere Grenze liegt bei etwa 15 Gew.-%, vorzugsweise 10 Gew.-%, besonders bevorzugt bei 5 Gew.-%.
Die Umsetzung kann gegebenenfalls in Gegenwart eines Katalysators, wie Organozinnverbindungen und/oder tertiären Aminen durchgeführt werden. Um die Reaktionsteilnehmer in flüssigem Zustand zu halten und eine bessere Temperaturkontrolle während der Reaktion zu ermöglichen, ist der Zusatz von organischen Lösemitteln, die keinen aktiven

Wasserstoff nach Zerewitinoff enthalten, möglich. Verwendbare Lösemittel sind beispielsweise Dimethylformamid, Ester, Ether, wie Diethylenglykoldimethylether, Ketoester, Ketone, wie Methylethylketon und Aceton, mit Methoxigruppen substituierte Ketone, wie Methoxi-hexanon, Glykoletherester, chlorierte Kohlenwasserstoffe, aliphatische und alicyclische Kohlenwasserstoffpyrrolidone, wie N-Methylpyrrolidon, hydrierte Furane, aromatische Kohlenwasserstoffe und deren Gemische. Die Menge an Lösemittel kann in weiten Grenzen variieren und sollte zur Bildung einer Präpolymer-Lösung mit geeigneter Viskosität ausreichen. Meistens genügen 0,01 bis 15 Gew.-% Lösemittel, vorzugsweise 0,02 bis 8 Gew.-% Lösemittel, bezogen auf den Festkörper. Sieden die gegebenenfalls nicht wasserlöslichen Lösemittel niedriger als das Wasser, so können sie nach der Herstellung der harnstoffhaltigen Polyurethan-Dispersion durch Vakuumdestillation oder Dünnschichtverdampfung schonend abdestilliert werden. Höhersiedende Lösemittel sollten wasserlöslich sein und verbleiben in der wäßrigen Polyurethan-Dispersion, um das Zusammenfließen der Polymer-Teilchen während der Filmbildung zu erleichtern. Besonders bevorzugt sind als Lösemittel N-Methylpyrrolidon, gegebenenfalls im Gemisch mit Ketonen, wie Methylethylketon.

Die anionischen Gruppen des NCO-Präpolymeren werden mit einem tertiären Amin mindestens teilweise neutralisiert. Die dadurch geschaffene Zunahme der Dispergierbarkeit in Wasser reicht für eine unendliche Verdünnbarkeit aus. Sie reicht auch aus, um das neutralisierte harnstoffgruppenhaltige Polyurethan beständig zu dispergieren. Geeignete tertiäre Amine sind beispielsweise Trimethylamin, Triethylamin, Dimethylethylamin, Diethylmethylamin, N-Methylmorpholin. Das NCO-Präpolymer wird nach der Neutralisation mit Wasser verdünnt und ergibt dann eine feinteilige Dispersion. Kurz danach werden die noch vorhandenen Isocyanatgruppen mit Di-und/oder Polyaminen mit primären und/oder sekundären Aminogruppen als Kettenverlängerer umgesetzt. Diese Reaktion führt zu einer weiteren Verknüpfung und Erhöhung des Molekulargewichts. Die Konkurrenzreaktion zwischen Amin und Wasser mit dem Isocyanat muß, um optimale Eigenschaften zu erhalten, gut abgestimmt (Zeit, Temperatur, Konzentration) und für eine reproduzierbare Produktion gut überwacht werden. Als Kettenverlängerer werden wasserlösliche Verbindungen bevorzugt, weil sie die Dispergierbarkeit des polymeren Endproduktes in Wasser erhöhen. Bevorzugt werden Hydrazin und organische Diamine, weil sie in der Regel die höchste Molmasse aufbauen, ohne das Harz zu gelieren. Vorausssetzung hierfür ist jedoch, daß das Verhältnis der Aminogruppen zu den Isocyanatgruppen zweckentsprechend gewählt wird. Die Menge des Kettenverlängerers wird von seiner Funktionalität, vom NCO-Gehalt des Präpolymeren und von der Dauer der Reaktion bestimmt. Das Verhältnis der aktiven Wasserstoffatome im Kettenverlängerer zu den NCO-Gruppen im Präpolymeren sollte in der Regel geringer als 2 : 1 und vorzugsweise im Bereich von 1,0 : 1 bis 1,75 : 1 liegen. Die Anwesenheit von überschüssigem aktiven Wasserstoff, insbesondere in Form von primären Aminogruppen, kann zu Polymeren mit unerwünscht niedriger Molmasse führen.

Polyamine sind im wesentlichen Alkylen-Polyamine mit 1 bis 40 Kohlenstoffatomen, vorzugsweise etwa 2 bis 15 Kohlenstoffatomen. Sie können Substituenten tragen, die keine mit Isocyanat-Gruppen reaktionsfähige Wasserstoffatome haben. Beispiele sind Polyamine mit linearer oder verzweigter aliphatischer, cycloaliphatischer oder aromatischer Struktur und wenigstens zwei primären Aminogruppen. Als Diamine sind zu nennen Ethylendiamin, Propylendiamin, 1,4-Butylendiamin, Piperazin, 1,4-Cyclohexyldimethylamin, Hexamethylendiamin-1,6, Trimethylhexamethylendiamin, Methandiamin, Isophorondiamin, 4,4'-Diaminodicyclohexylmethan und Aminoethylethanolamin. Bevorzugte Diamine sind Alkyl- oder Cycloalkyldiamine, wie Propylendiamin und 1-Amino-3-aminomethyl-3,5,5-trimethylcyclohexan. Die Ketterverlängerung kann wenigstens teilweise mit einem Polyamin erfolgen, das mindestens drei Amingruppen mit einem reaktionsfähigen Wasserstoff aufweist. Dieser Polyamin-Typ kann in einer solchen Menge eingesetzt werden, daß nach der Verlängerung des Polymers nicht umgesetzte Aminstickstoffatome mit 1 oder 2 reaktionsfähigen Wasserstoffatomen vorliegen. Solche brauchbaren Polyamine sind Diethylentriamin, Triethylentetraamin, Dipropylentriamin und Dibutylentriamin. Bevorzugte Polyamine sind die Alkyl- bder Cycloalkyltriamine, wie Diethylentriamin. Um ein Gelieren bei der Kettenverlängerung zu verhindern, können auch kleine Anteile von Monoaminen, wie Ethylhexylamin zugesetzt werden.

Die erfindungsgemäß einzusetzenden wasserverdünnbaren Polyurethanharze und deren Herstellung werden auch in der EP-A-89497 und US-PS 4,719,132 beschrieben.

Als Bindemittel geeignet sind aber auch andere, bekannte wasserverdünnbare bzw. wasserdispergierbare Polyurethanharze, die beispielsweise erhalten werden durch Umsetzung der oben beschriebenen, Isocyanatgruppen aufweisenden Präpolymeren mit Tri- und/bder Polyolen statt mit Polyaminen. Derartige wasserverdünnbare Polyurethanharze und ihre Herstellung werden beispielsweise in der US-PS 4,423,179 und der DE-OS 3739322 beschrieben.

Als Beispiel für mindestens drei Hydroxylgruppen enthaltende Polyole seien Trimethylolpropan, Glycerin, Erythrit, Mesoerythrit, Arabit, Adonit usw. genannt. Bevorzugt wird Trimethylolpropan eingesetzt. Die Umsetzung des Präpolymeren mit den Tri- und/oder Polyolen wird vorzugsweise durch die Stöchiometrie der eingesetzten Verbindungen so gesteuert, daß es zu Kettenverlängerungen kommt.

Besonders vorteilhaft wird in den erfindungsgemäß eingesetzten wasserverdünnbaren Überzugsmitteln als Bindemittel ein wasserverdünnbares Emulsionspolymer eingesetzt, das erhältlich ist, indem

(a) in einer ersten Stufe 10 bis 90 Gewichtsteile eines ethylenisch ungesättigten Monomeren oder eines Gemisches aus ethylenisch ungesättigten Monomeren in wäßriger Phase in Gegenwart eines oder mehrerer Emulgatoren und eines oder mehrerer radikalbildender Initiatoren polymerisiert werden, wobei das ethylenisch ungesättigte Monomer bzw. das Gemisch aus ethylenisch ungesättigten Monomeren so ausgewählt wird, daß in der ersten Stufe ein Polymer mit einer Glasübergangstemperatur ($T_{G1}$) von + 30 bis + 110 °C erhalten wird und,

(b) nachdem mindestens 80 Gew.-% des in der ersten Stufe eingesetzten ethylenisch ungesättigten Monomers bzw. Monomerengemisches umgesetzt worden sind, in einer zweiten Stufe 90 bis 10 Gewichtsteile eines ethylenisch ungesättigten Monomeren oder eines Gemisches aus ethylenisch ungesättigten Monomeren in Gegenwart des in der ersten Stufe erhaltenen Polymers polymerisiert werden, wobei das in der zweiten Stufe eingesetzte Monomer bzw. das in der zweiten Stufe eingesetzte Gemisch aus ethylenisch ungesättigten Monomeren so ausgewählt wird, daß eine alleinige Polymerisation des in der zweiten Stufe eingesetzten Monomers bzw. des in der zweiten Stufe eingesetzten Gemisches aus ethylenisch ungesättigten Monomeren zu einem Polymer mit einer Glasübergangstemperatur ($T_{G2}$) von - 60 bis + 20°C führen würde, und wobei die Reaktionsbedingungen so gewählt werden, daß das erhaltene Emulsionspolymer eine zahlenmittlere Molmasse von 200.000 bis 2.000.000 aufweist und wobei das in der ersten Stufe eingesetzte ethylenisch ungesättigte Monomer bzw. Monomerengemisch und das in der zweiten Stufe eingesetzte ethylenisch ungesättigte Monomer bzw. Monomerengemisch in Art und Menge so ausgewählt werden, daß das erhaltene Emulsionspolymer eine Hydroxylzahl von 2 bis 100 mgKOH/g aufweist und die Differenz $T_{G1}$ - $T_{G2}$ 10 bis 170°C beträgt.

Die erfindungsgemäß eingesetzten wasserverdünnbaren Emulsionspolymere sind durch eine zweistufige Emulsionspolymerisation in einem wäßrigen Medium in den bekannten Apparaturen, beispielsweise in einem Rührkessel mit Heiz- und Kühlvorrichtung, herstellbar. Die Zugabe der Monomeren kann in der Weise erfolgen, daß eine Lösung aus dem gesamten Wasser, dem Emulgator und einem Teil des Initiators vorgelegt wird und das Monomer bzw. Monomerengemisch und getrennt davon, aber parallel dazu der Rest des Initiators bei der Polymerisationstemperatur langsam zugegeben wird. Es ist jedoch auch möglich, einen Teil des Wassers und des Emulgators vorzulegen und aus dem Rest des Wassers und des Emulgators und aus dem Monomer bzw. Monomerengemisch eine Voremulsion herzustellen, die bei der Polymerisationstemperatur langsam zugegeben wird, wobei der Initiator wiederum getrennt zugegeben wird.

Es ist bevorzugt, in der ersten Stufe das Monomer bzw. Monomerengemisch in Form einer Voremulsion zuzugeben und in der zweiten Stufe das Monomer bzw. Monomerengemisch in Substanz, d.h. ohne Wasser und Emulgator zuzugeben und den Initiator getrennt, aber parallel dazu zuzugeben. Es ist besonders bevorzugt, in der ersten Stufe aus einem Teil (in der Regel etwa 30 Gew.-% der insgesamt einzusetzenden Voremulsion) der in der ersten Stufe einzusetzenden Voremulsion zuerst ein Saatpolymer herzustellen und danach den Rest der in der ersten Stufe einzusetzenden Voremulsion zuzugeben.

Die Polymerisationstemperatur liegt im allgemeinen im Bereich von 20 bis 100°C, vorzugsweise 40 bis 90°C.

Das Mengenverhältnis zwischen den Monomeren und dem Wasser kann so ausgewählt werden, daß die resultierende Dispersion einen Feststoffgehalt von 30 bis 60 Gew.-%, vorzugsweise 35 bis 50 Gew.-%, aufweist.

Als Emulgator wird vorzugsweise ein anionischer Emulgator allein oder im Gemisch eingesetzt.

Beispiele für anionische Emulgatoren sind die Alkalisalze von Schwefelsäurehalbestern von Alkylphenolen oder Alkoholen, ferner die Schwefelsäurehalbester von oxethylierten Alkylphenolen oder oxethylierten Alkoholen, vorzugsweise die Alkalisalze des Schwefelsäurehalbesters eines mit 4 - 5 Mol Ethylenoxid pro Mol umgesetzten Nonylphenols, Alkyl- oder Arylsulfonats, Natriumlaurylsulfat, Natriumlaurylethoxilatsulfat und sekundäre Natriumalkansulfonate, deren Kohlenstoffkette 8 - 20 Kohlenstoffatome enthält. Die Menge des anionischen Emulgators beträgt 0,1 - 5,0 Gew.-%, bezogen auf die Monomeren, vorzugsweise 0,5 - 3,0 Gew.-%. Ferner kann zur Erhöhung der Stabilität der wäßrigen Dispersionen zusätzlich ein nichtionischer Emulgator vom Typ eines ethoxilierten Alkylphenols oder Fettalkohols, z.B. ein Additionsprodukt von 1 Mol Nonylphenol und 4 - 30 Mol Ethylenoxid in Mischung mit dem anionischen Emulgator eingesetzt werden.

Als radikalbildender Initiator wird vorzugsweise eine Peroxidverbindung eingesetzt. Der Initiator ist wasserlöslich oder monomerlöslich. Vorzugsweise wird ein wasserlöslicher Initiator verwendet.

Als Initiatoren eignen sich die üblichen anorganischen Perverbindungen, wie Ammoniumpersulfat, Kaliumpersulfat, Ammonium- oder Alkalimetallperoxidiphosphat und organische Peroxide, wie z.B. Benzoylperoxid, organische Perester, wie Perisopivalat, zum Teil in Kombination mit Reduktionsmitteln, wie Natriumdisulfit, Hydrazin, Hydroxylamin und katalytische Mengen Beschleuniger, wie Eisen-, Kobalt-, Cer- und

Vanadylsalze. Vorzugsweise eingesetzt werden Alkali- bzw. Ammoniumperoxidisulfate. Es können auch die Redox-Initiatorsysteme, die in der EP-A-107300 offenbart werden, eingesetzt werden.

In der ersten Stufe werden 10 bis 90, vorzugsweise 35 bis 65, Gewichtsteile eines ethylenisch ungesättigten Monomeren oder eines Gemisches aus ethylenisch ungesättigten Monomeren emulsionspolymerisiert. Das in der ersten Stufe eingesetzte Monomer bzw. Monomerengemisch wird so ausgewählt, daß bei völliger Auspolymerisation des in der ersten Stufe eingesetzten Monomers bzw. Monomerengemisches ein Polymer mit einer Glasübergangstemperatur ($T_{G1}$) von + 30°C bis + 110°C, vorzugsweise 60 bis 95°C, erhalten wird. Da die Glasübergangstemperatur von Emulsionspolymeren nach der Gleichung

$$\frac{1}{T_G} = \sum_{n=1}^{n=x} \frac{W_n}{T_{Gn}}$$

$T_G$ = Glasübergangstemp. des Copolymers in K
$W_n$ = Gewichtsanteil des n-ten Monomers
$T_{Gn}$ = Glasübergangstemp. des Homopolymers aus dem n-ten Monomer
x = Anzahl der verschiedenen Monomeren

näherungsweise berechnet werden kann, bereitet es dem Fachmann keine Probleme, das in der ersten Stufe einzusetzende Monomer bzw. Monomerengemisch so auszuwählen, daß bei völliger Auspolymerisation des in der ersten Stufe eingesetzten Monomers bzw. Monomerengemisches ein Polymer mit einer Glasübergangstemperatur ($T_{G1}$) von + 30 bis + 110°C, vorzugsweise 60 bis 95°C, erhalten wird.

Als Beispiele für Monomere, die in der ersten Stufe eingesetzt werden können, werden genannt: vinylaromatische Kohlenwasserstoffe, wie Styrol, $\alpha$-Alkylstyrol und Vinyltoluol, Ester der Acrylsäure oder Methacrylsäure, insbesondere aliphatische und cycloaliphatische Acrylate oder Methacrylate mit bis zu 20 Kohlenstoffatomen im Alkoholrest, wie z.B. Methyl-, Ethyl-, Propyl-, Butyl-, Hexyl-, Ethylhexyl-, Stearyl-, Lauryl- und Cyclohexylacrylat oder -methacrylat, Acryl- und/oder Methacrylsäure, Acryl- und/oder Methacrylamid, N-Methylolacrylamid und/oder N-Methylolmethacrylamid, Hydroxialkylester der Acrylsäure, Methacrylsäure oder einer anderen $\alpha,\beta$-ethylenisch ungesättigten Carbonsäure, wie z.B. 2-Hydroxiethylacrylat, 2-Hydroxipropylacrylat, 3-Hydroxipropylacrylat, 2-Hydroxipropylmethacrylat, 3-Hydroxipropylmethacrylat, 2-Hydroxiethylmethacrylat, 4-Hydroxibutylacrylat, 4-Hydroxibutylmethacrylat usw.

In der ersten Stufe werden vorzugsweise ethylenisch ungesättigte Monomere bzw. Gemische aus ethylenisch ungesättigten Monomeren eingesetzt, die im wesentlichen frei von Hydroxyl- und Carboxylgruppen sind. "Im wesentlichen frei" soll bedeuten, daß es bevorzugt ist, Monomere bzw. Monomerengemische einzusetzen, die frei von Hydroxyl- und Carboxylgruppen sind, daß die eingesetzten Monomere bzw.
Monomerengemische aber auch geringe Mengen (z.B. infolge von Verunreinigungen) an Hydroxyl- und/oder Carboxylgruppen enthalten können. Der Gehalt an Hydroxyl- und Carboxylgruppen sollte vorzugsweise höchstens so hoch sein, daß ein aus dem in der ersten Stufe eingesetzten Monomer bzw. Monomerengemisch hergestelltes Polymer eine OH-Zahl von höchstens 5 mg KOH/g und eine Säurezahl von höchstens 3 mg KOH/g aufweist.
In der ersten Stufe wird besonders bevorzugt ein Gemisch aus

(a1) 100 bis 60, vorzugsweise 99,5 bis 75 Gew.-%, eines cycloaliphatischen oder aliphatischen Esters der Methacrylsäure oder Acrylsäure oder eines Gemisches aus solchen Estern und
(a2) 0 bis 40, vorzugsweise 0,5 bis 25 Gew.-%, eines mit (a1) copolymerisierbaren Monomeren oder eines Gemisches aus solchen Monomeren

eingesetzt, wobei die Summe der Gewichtsanteile von (a1) und (a2) stets 100 Gew.-% ergibt. Als Komponente (a1) können z.B. eingesetzt werden: Cyclohexylacrylat, Cyclohexylmethacrylat, Alkylacrylate und Alkylmethacrylate mit bis zu 20 Kohlenstoffatomen im Alkylrest, wie z.B. Methyl-, Ethyl-, Propyl-, Butyl-, Hexyl-, Ethylhexyl-, Stearyl- und Laurylacrylat und -methacrylat oder Gemische aus diesen Monomeren.

Als Komponente (a2) können z.B. eingesetzt werden vinylaromatische Kohlenwasserstoffe, wie Styrol, $\alpha$-Alkylstyrol und Vinyltoluol, Acryl- und Methacrylamid und Acryl- und Methacrylnitril oder Gemische aus diesen Monomeren.

Nachdem mindestens 80 Gew.-%, vorzugsweise mindestens 95 Gew.-% des in der ersten Stufe eingesetzten ethylenisch ungesättigten Monomers bzw. Monomerengemisches umgesetzt worden sind, werden in einer zweiten Stufe 90 bis 10, vorzugsweise 65 bis 35, Gewichtsteile eines ethylenisch ungesättigten Monomeren oder eines Gemisches aus ethylenisch ungesättigten Monomeren in Gegenwart des in der ersten Stufe erhaltenen Polymers emulsionspolymerisiert, wobei das in der zweiten Stufe eingesetzte Monomer bzw. Monomerengemisch so ausgewählt wird, daß eine alleinige Polymerisation des in der zweiten Stufe eingesetzten Monomers bzw. Monomerengemisches zu einem Polymer mit einer Glasübergangstemperatur ($T_{G2}$) von -60 bis + 20°C, vorzugsweise -50 bis 0°C, führen würde. Diese Auswahl bereitet dem Fachmann keine Schwierigkeiten, da die Glasübergangstemperaturen von Emulsionspolymeren - wie oben bereits dargelegt - leicht näherungsweise berechnet werden können. Es ist weiter erfindungswesentlich, daß das in der ersten Stufe eingesetzte Monomer bzw. Monomerengemisch und das in der zweiten Stufe eingesetzte Monomer bzw. Monomerengemisch in der Art und Menge so ausgewählt werden, daß das erhaltene Emulsionspolymer eine Hydroxylzahl von 2 bis 100 mg KOH/g, vorzugsweise von 10 bis 50 mg KOH/g, aufweist und die Differenz $T_{G1}$ - $T_{G2}$ 10 bis 170 °C, vorzugsweise 80 bis 150 °C, beträgt.

Als Beispiele für Monomere, die in der zweiten Stufe eingesetzt werden können, werden genannt: vinylaromatische

Kohlenwasserstoffe, wie Styrol, α-Alkylstyrol und Vinyltoluol, Ester der Acrylsäure oder Methacrylsäure, insbesondere aliphatische und cycloaliphatische Acrylate oder Methacrylate mit bis zu 20 Kohlenstoffatomen im Alkoholrest, wie z.B. Methyl-, Ethyl-, Propyl-, Butyl-, Hexyl-, Ethylhexyl-, Stearyl-, Lauryl- und Cyclohexylacrylat oder -methacrylat, Acryl- und/oder Methacrylsäure, Acryl- und/oder Methacrylamid, N-Methylolacrylamid und/oder N-Methylolmethacrylamid, Hydroxialkylester der Acrylsäure, Methacrylsäure oder einer anderen α,β-ethylenisch ungesättigten Carbonsäure, wie z.B. 2-Hydroxiethylacrylat, 2-Hydroxipropylacrylat, 3-Hydroxipropylacrylat, 2-Hydroxipropylmethacrylat, 3-Hydroxipropylmethacrylat, 2-Hydroxiethylmethacrylat, 4-Hydroxibutylacrylat, 4-Hydroxibutylmethacrylat usw. In der zweiten Stufe wird vorzugsweise ein Gemisch aus

(b1) 47 bis 99, vorzugsweise 75 bis 90, Gew.-% eines cycloaliphatischen oder aliphatischen Esters der Methacrylsäure oder Acrylsäure oder eines Gemisches aus solchen Estern,
(b2) 1 bis 20, vorzugsweise 5 bis 15, Gew.-% eines mindestens eine Hydroxylgruppe tragenden mit (b1), (b3) und (b4) copolymerisierbaren Monomeren oder eines Gemisches aus solchen Monomeren,
(b3) 0 bis 8, vorzugsweise 2 bis 6, Gew.-% eines mindestens eine Carboxyl- oder Sulfonsäuregruppe tragenden, mit (b1), (b2) und (b4) copolymerisierbaren Monomeren oder eines Gemisches aus solchen Monomeren und
(b4) 0 bis 25, vorzugsweise 2 bis 15, Gew.-% eines weiteren mit (b1), (b2) und (b3) copolymerisierbaren Monomeren oder eines Gemisches aus solchen Monomeren
eingesetzt, wobei die Summe der Gewichtsanteile von (b1), (b2), (b3) und (b4) stets 100 Gew. % ergibt.

Als Komponente (b1) können z.B. eingesetzt werden: Cyclohexylacrylat, Cyclohexylmethacrylat, Alkylacrylate und Alkylmethacrylate mit bis zu 20 Kohlenstoffatomen im Alkylrest, wie z.B. Methyl-, Ethyl-, Propyl-, Butyl-, Hexyl-, Ethylhexyl-, Stearyl- und Laurylacrylat und -methacrylat oder Gemische aus diesen Monomeren.

Als Komponente (b2) können z.B. eingesetzt werden: Hydroxialkylester der Acrylsäure, Methacrylsäure oder einer anderen ethylenisch ungesättigten Carbonsäure. Diese Ester können sich von einem Alkylenglykol ableiten, das mit der Säure verestert ist, oder sie können durch Umsetzung der Säure mit einem Alkylenoxid erhalten werden. Als Komponente (b2) werden vorzugsweise Hydroxialkylester der Acrylsäure und Methacrylsäure, in denen die Hydroxialkylgruppe bis zu 4 Kohlenstoffatome enthält, oder Mischungen aus diesen Hydroxialkylestern eingesetzt. Als Beispiele für derartige Hydroxialkylester werden 2-Hydroxiethylacrylat, 2-Hydroxipropylacrylat, 3-Hydroxipropylacrylat, 2-Hydroxipropylmethacrylat, 3-Hydroxipropylmethacrylat, 2-Hydroxiethylmethacrylat, 4-Hydroxibutylacrylat oder 4-Hydroxibutylmethacrylat genannt. Entsprechende Ester von anderen ungesättigten Säuren, wie z.B. Ethacrylsäure, Crotonsäure und ähnliche Säuren mit bis zu etwa 6 Kohlenstoffatomen pro Molekül können auch eingesetzt werden.

Als Komponente (b3) werden vorzugsweise Acrylsäure und/oder Methacrylsäure und/oder Acrylamidomethylpropansulfonsäure eingesetzt. Es können aber auch andere ethylenisch ungesättigte Säuren mit bis zu 6 Kohlenstoffatomen im Molekül eingesetzt werden. Als Beispiele für solche Säuren werden Ethacrylsäure, Crotonsäure, Maleinsäure, Fumarsäure und Itaconsäure genannt.

Als Komponente (b4) können z.B. eingesetzt werden: vinylaromatische Kohlenwasserstoffe, wie Styrol, α-Alkylstyrol und Vinyltoluol, Acryl- und Methacrylamid und Acryl- und Methacrylnitril oder Gemische aus diesen Monomeren.

Das erfindungsgemäß eingesetzte Emulsionspolymer sollte eine zahlenmittlere Molmasse (Bestimmung: gelpermeationschromatographisch mit Polystyrol als Standard) von 200.000 bis 2.000.000, vorzugsweise von 300.000 bis 1.500.000 sowie üblicherweise Säurezahlen von unter 100 mg KOH/g und OH-Zahlen von 2 bis 100 mg KOH/g aufweisen. Enthält das Emulsionspolymer dabei keine oder nur sehr wenige Säuregruppen (Säurezahl etwa unterhalb von 3 mg KOH/g), so ist es vorteilhaft, der Beschichtungszusammensetzung ein carboxylgruppenhaltiges Harz, beispielsweise ein carboxylgruppenhaltiges Polyurethan-, Polyester- oder Polyacrylatharz zuzusetzen. Die Mengen des carboxylgruppenhaltigen Harzes sind dabei so zu wählen, daß die Säurezahl der Mischung aus Emulsionspolymer und carboxylgruppenhaltigem Harz größer gleich 10 mg KOH/g ist.

Dem Fachmann ist bekannt, wie er die Reaktionsbedingungen während der Emulsionspolymerisation zu wählen hat, damit er Emulsionspolymere erhält, die die oben angegebenen zahlenmittleren Molmassen aufweisen (vgl. z.B. Chemie, Physik und Technologie der Kunststoffe in Einzeldarstellungen, Dispersionen synthetischer Hochpolymerer, Teil 1 von F. Hölscher, Springer Verlag, Berlin, Heidelberg, New York, 1969).
Schließlich ist es auch möglich, als filmbildendes Material eine Mischung aus weniger als 100 bis 40 Gew.-% des obenbeschriebenen Emulsionspolymers und bis zu 60 Gew.-% des obenbeschriebenen Polyurethanharzes einzusetzen, wobei sich die Mengenanteile jeweils auf den Festkörperanteil beziehen und ihre Summe stets 100 Gew.-% beträgt.

Die erfindungsgemäß eingesetzten wäßrigen Überzugsmittel können ggf. neben dem Emulsionspolymer bzw. dem Gemisch aus Emulsionspolymer und Polyurethanharz vorteilhafterweise noch weitere verträgliche wasserverdünnbare Kunstharze enthalten, wie z. B. Aminoplastharze, Polyester und Polyether, die im allgemeinen als Anreibeharze für die Pigmente dienen.
Die erfindungsgemäß eingesetzten wäßrigen Überzugsmittel können ggf. 5 bis 20 Gew.-%, bezogen auf den Gesamtfeststoffgehalt der Überzugsmittel, eines wasserverdünnbaren Aminoplastharzes, vorzugsweise Melaminharz und 5 bis

20 Gew.-% eines wasserverdünnbaren Polyethers (z. B. Polypropylenglykol mit einem zahlenmittleren Molekulargewicht von 400 bis 900) enthalten.

Selbstverständlich können in den erfindungsgemäß eingesetzten wäßrigen Überzugsmitteln als filmbildendes Material auch alle anderen bekannten wasserverdünnbaren bzw. wasserdispergierbaren Harze, beispielsweise auf der Basis von Acrylatcopolymerisaten und Polyesterharzen, allein oder in Mischungen eingesetzt werden.
Die wäßrigen bzw. wasserverdünnbaren Überzugsmittel enthalten außer dem filmbildenden Material noch organische Lösungsmittel in üblichen Mengen, bevorzugt 0 bis 20 Gew.-% Lösungmittel, bezogen auf das Gesamtgewicht des Überzugsmittels. Beispiele für geeignete Lösungsmittel sind Alkohole, wie z.B. Butylglykol, Ethoxipropanol, Ethanol, Propanol, Ketone, wie z.B. Methylethylketon, Methylisobutylketon und Kohlenwasserstoffe, wie z.B. verschiedene Solvesso®-Typen, Solventnaphta®.

Außerdem enthalten die wäßrigen Überzugsmittel noch Wasser in üblichen Mengen, bevorzugt 30 bis 95 Gew.-% Wasser, bezogen auf das Gesamtgewicht des Überzugsmittels.
Gegebenenfalls können die wäßrigen Überzugsmittel noch weitere übliche Hilfs- und Zusatzstoffe in üblichen Mengen enthalten, beispielsweise Füllstoffe, wobei vorzugsweise nicht färbende, lasierende Füllstoffe, wie z. B. Siliciumdioxid, Schichtsilikate, Bariumsulfat u.ä. eingesetzt werden. Die Füllstoffe werden dabei bevorzugt in Mengen von gegebenenfalls 0 bis 20 Gew.-%, bezogen auf das Gesamtgewicht des Überzugsmittels, eingesetzt. Gegebenenfalls können die wäßrigen Überzugsmittel noch weitere übliche Lackadditive in üblichen Mengen, bevorzugt 0 bis 5 Gew.-%, bezogen auf das Gesamtgewicht des Überzugsmittels, enthalten. So können insbesondere übliche Additive zur Verbesserung der Untergrundbenetzung, der Filmbildung, der Haftung auf dem Untergrund, der Entschäumung und/oder der Rheologiesteuerung zugesetzt werden.
Die erfindungsgemäß eingesetzten Überzugsmittel werden bevorzugt als Klarlack eingesetzt. Für den Fall, daß die Überzugsmittel zur großflächigeren Beschichtung der Altlackierung bis hin zu Begrenzungen eingesetzt werden, können sie auch farbgebende Pigmente enthalten, die eine verbesserte Farbtonangleichung ermöglichen. Diese Pigmente werden bevorzugt in Mengen von 0 bis 20 Gew.-%, bezogen auf das Gesamtgewicht des Überzugsmittels, eingesetzt. Beispiele für geeignete farbgebende Pigmente sind solche auf anorganischer Basis, wie z. B. Titandioxid, Eisenoxid, Ruß usw. sowie solche auf organischer Basis, wie z. B. Phthalocyanin, Chinacrydon u.ä.
Die wäßrigen Überzugsmittel enthalten aber keine Metallpigmente und keine nicht-metallischen Effektpigmente.

Auf diese erste Überzugsschicht wird in einem zweiten Schritt nach Bildung eines Polymerfilms, bevorzugt nach vorheriger Trocknung dieser ersten Überzugsschicht bei Temperaturen zwischen Umgebungstemperatur und 140 °C, bevorzugt bei Temperaturen unter 80 °C, während einer Zeit von 5 bis 60 min ggf. nach einer kurzen Abkühlzeit von bis zu 10 min eine wäßrige Beschichtungszusammensetzung aufgebracht. Diese wäßrige bzw. wasserverdünnbare Basisbeschichtungszusammensetzung wird dabei im Bereich der Schadstelle deckend, d. h., daß Farbtonunterschiede zum Untergrund nicht erkennbar sind, und auf der angrenzenden, mit dem oben beschriebenen wäßrigen Überzugsmittel vorgespritzten Fläche aus laufend, d. h. mit vom Schadstellenrand zum äußeren Rand hin abnehmender Schichtstärke, lackiert. Ein Überlappen mit der Altlackierung, d. h. ein Aufbringen des Basislackes über den Bereich der ersten Überzugsschicht hinaus, muß dabei vermieden werden, um eine Markierung im Randzonenbereich durch veränderte Metallpigmentorientierung zu vermeiden. Wenn im ersten Schritt des Verfahrens die gesamte Teilfläche mit dem wäßrigen Überzugsmittel beschichtet wurde, kann auch die gesamte Teilfläche deckend mit dem Basislack beschichtet werden. Die Trockenfilmschichtdicke der Basisschicht liegt dabei im Bereich der Schadstelle im allgemeinen zwischen 5 und 50 µm.
Für den Einsatz in dem erfindungsgemäßen Verfahren geeignet sind alle wäßrigen Basisbeschichtungszusammensetzungen, die bei niedrigen Temperaturen von im allgemeinen Umgebungstemperatur bis ca. 140 °C, bevorzugt bei Temperaturen unterhalb von 80 °C aushärtbar sind. Besonders bevorzugt eingesetzt werden wäßrige Basisbeschichtungszusammensetzungen, die als filmbildendes Material das obenbeschriebene Emulsionspolymer, das durch das ebenfalls bereits beschriebene zweistufige Emulsionspolymerisationsverfahren herstellbar ist, enthalten. Für Einzelheiten über die Eigenschaften und Herstellung dieses Emulsionspolymers wird daher nur auf die Seiten 19 bis 29 der vorliegenden Beschreibung verwiesen.
Dieses Emulsionspolymer wird in den Basisbeschichtungszusammensetzungen üblicherweise in Mengen von 5 bis 50 Gew.-%, bevorzugt von 5 bis 25 Gew.-%, jeweils bezogen auf das Gesamtgewicht der Basisbeschichtungszusammensetzung, eingesetzt.

Es ist auch möglich, als filmbildendes Material in den Basisbeschichtungszusammensetzungen die ebenfalls bereits beschriebenen wasserverdünnbaren bzw. wasserdispergierbaren Polyurethanharze einzusetzen.
Bezüglich Einzelheiten über die Eigenschaften und Herstellung dieser Polyurethanharze wird auf die Seiten 10 bis 19 der vorliegenden Beschreibung verwiesen. Diese Polyurethanharze werden in den Basisbeschichtungszusammensetzungen üblicherweise in Mengen von 1 bis 40 Gew.-%, bevorzugt 3 bis 25 Gew.-%, bezogen auf das Gesamtgewicht der Basisbeschichtungszusammensetzung, eingesetzt.

Die wäßrigen Basisbeschichtungszusammensetzungen können als filmbildendes Material auch eine Mischung aus bevorzugt weniger als 100 bis 40 Gew.-% des obenbeschriebenen Emulsionspolymers und bevorzugt 9 bis 60

Gew.-% des obenbeschriebenen Polyurethanharzes enthalten, wobei sich die Mengenanteile jeweils auf den Festkörperanteil beziehen und ihre Summe stets 100 Gew.-% beträgt. In jeweils üblichen Mengen enthalten die Basisbeschichtungszusammensetzungen außerdem noch organische Lösungsmittel, Wasser, ggf. übliche Hilfs- und Zusatzstoffe,farbgebende Pigmente und Metallic- und/oder Effektpigmente.
Als Pigmente können die Basisbeschichtungszusammensetzungen farbgebende Pigmente auf anorganischer Basis, wie z. B. Titandioxid, Eisenoxid, Ruß usw., farbgebende Pigmente auf organischer Basis sowie übliche Metallpigmente (z. B. handelsübliche Aluminiumbronzen, Edelstahlbronzen...) und nicht-metallische Effektpigmente (z. B. Perlglanz bzw. Interferenzpigmente) enthalten. Die Basisbeschichtungszusammensetzungen enthalten vorzugsweise Metallpigmente und/oder Effektpigmente. Die Pigmentierungshöhe liegt in üblichen Bereichen, bevorzugt 0 bis 10 Gew.-%, bezogen auf das Gesamtgewicht der Basisbeschichtungszusammensetzung.

Weiterhin können den Basisbeschichtungszuammensetzungen vernetzte polymere Mikroteilchen, wie sie in der EP-A-38 127 offenbart sind und/oder übliche rheologische anorganische oder organische Additive in üblichen Mengen, wie beispielsweise 0,05 bis 6 Gew.-%, bezogen auf das Gesamtgewicht der Basisbeschichtungszusammensetzung zugesetzt werden. So wirken als Verdicker beispielsweise anorganische Schichtsilikate, wie z. B. Aluminium-Magnesium-Silikate, Natrium-MagnesiumSchichtsilikate und Natrium-Magnesium-Fluor-Lithium-Schichtsilikate des Montmorillonit-Typs, wasserlösliche Celluloseether, wie Hydroxiethylcellulose, Methylcellulose oder Carboximethylcellulose sowie synthetische Polymere mit ionischen und/oder assoziativ wirkenden Gruppen, wie Polyvinylalkohol, Poly(meth)acrylamid, Poly(meth)acrylsäure, Polyvinylpyrrolidon, Styrol-Maleinsäureanhydrid- oder Ethylen-Maleinsäureanhydrid-Copolymere und ihre Derivate oder auch hydrophob modifizierte ethoxilierte Urethane oder Polyacrylate.
Besonders bevorzugt ist eine Kombination aus carboxylgruppenhaltigem Polyacrylat-Copolymer mit einer Säurezahl von 60 bis 780, bevorzugt 200 bis 500 mg KOH/g und einem Natrium-Magnesium-Schichtsilikat. Besonders bevorzugte Basisbeschichtungszusammensetzungen mit verbesserter Schwitzwasserbeständigkeit der Beschichtungen werden erhalten, wenn das Natrium-Magnesium-Schichtsilikat in Form einer wäßrigen Paste eingesetzt wird.
Besonders bevorzugte Pasten enthalten entweder 3 Gew.-% Schichtsilikat sowie 3 Gew.-% Polypropylenglykol oder 2 Gew.-% Schichtsilikat und 2 Gew.-%, jeweils bezogen auf das Gesamtgewicht der Paste, anderer handelsüblicher oberflächenaktiver Substanzen.

Die Basisbeschichtungszusammensetzungen weisen im allgemeinen einen Festkörpergehalt von etwa 5 bis 50 Gew.-%, bevorzugt 10 bis 25 Gew.-%, auf.

Die Beschichtungszusammensetzungen können zusätzlich übliche organische Lösemittel enthalten. Deren Anteil wird möglichst gering gehalten. Es liegt beispielsweise unter 15 Gew.-%.

Die Basisbeschichtungszusammensetzungen werden im allgemeinen auf einen pH-Wert zwischen 6,5 und 9,0 eingestellt. der pH-Wert kann mit üblichen Aminen, wie z. B. Ammoniak, Triethylamin, Dimethylaminoethanol und N-Methylmorpholin eingestellt werden.

Für den Einsatz in dem erfindungsgemäßen Verfahren sind aber auch andere bekannte Basisbeschichtungszusammensetzungen geeignet, beispielsweise die in der GB-A-2,073,609 und der EP-A-195 931 beschriebenen Systeme.

Nach Bildung eines Polymerfilms aus der Basisbeschichtungszusammensetzung, bevorzugt nach Trocknung der Basisschicht bei Temperaturen von Umgebungstemperatur bis 140°C, bevorzugt bei Temperaturen unter 80°C, während einer Zeit von 5 bis 60 min , ggf. nach einer kurzen Abkühlzeit von im allgemeinen mindestens 5 Minuten, wird auf der Basisschicht und - falls nicht die gesamte erste Überzugsschicht mit einer Basisschicht versehen wurde - auf die ggf. noch unbeschichteten Teile der ersten Überzugsschicht eine geeignete transparente Deckbeschichtungszusammensetzung aufgebracht.
Bevorzugt wird dabei die Deckbeschichtungszusammensetzung auslaufend in den unbeschichteten Bereich der Altlackierung hinein oder auf die gesamte angrenzende Altlackierung bis hin zu einer Kante, Zierleiste o. ä. deckend aufgebracht, da so zeitaufwendige Polierarbeit entfällt.
Die Trockenfilmschichtdicke der Deckschicht liegt im allgemeinen zwischen 30 und 100 µm. Als Deckbeschichtungszusammensetzung geeignet sind sowohl organisch gelöste als auch wäßrige 1- oder 2-Komponenten-Klarlacke. Häufig eingesetzt werden Klarlacke auf Basis eines hydroxlgruppenhaltigen Acrylatcopolymerisates und eines blockierten Polyisocyanates. Derartige Klarlacke sind beispielsweise in den Patentanmeldungen DE 34 12 534, DE 36 09 519, DE 37 31 652 und DE 38 23 005 beschrieben. Geeignet sind auch die in der internationalen Patentanmeldung mit der internationalen Veröffentlichungsnummer WO88/02010 beschriebenen feuchtigkeitshärtenden Klarlacke auf Basis von Polyadditionspolymeren mit Alkoxi- oder Acryloxisilaneinheiten. Nach einer ggf. erforderlichen Ablüftzeit von etwa 5 Minuten wird dann die Deckschicht ggf. zusammen mit der Basisschicht und ggf. zusammen mit der in Stufe (2) erhaltenen Überzugsschicht bei Temperaturen zwischen Umgebungstemperatur und 140 °C, bevorzugt bei Temperaturen von unter 80 °C, während einer Zeit von 5 bis 120 min getrocknet.

Die Erfindung wird nun in den nachfolgenden Beispielen näher erläutert. Alle Angaben über Teile und Prozente sind dabei Gewichtsangaben, sofern nicht ausdrücklich etwas anderes festgestellt wird. Als Substrat wird dabei eine mehrschichtige Altlackierung verwendet, wie sie in der Autoserienlackierung üblich ist. Dabei ist es unerheblich, ob es

sich um Lackaufbauten auf der Basis konventioneller oder wasserverdünnbarer Systeme handelt.

1. Simulierung einer Schadstelle

1.1 Simulierung einer Schadstelle 1

Als Substrat dient ein elektrotauchgrundiertes Stahlblech, das mit einem handelsüblichen konventionellen Füllermaterial auf Basis eines melaminvernetzten Polyesterharzes (FC 60-7133 der Firma BASF Lacke + Farben AG, Münster; Trockenfilmschichtdicke 40 µm), einem handelsüblichen konventionellen Metallicbasislack auf Basis Celluloseacetobutyrat (AE 54-9153 der Firma BASF Lacke + Farben AG, Münster; Trockenfilmschichtdicke 15 µm) und einem handelsüblichen konventionellen Klarlack auf Basis isocyanatvernetzter hydroxylgruppenhaltiger Acrylate (AF 23-0185 der Firma BASF Lacke + Farben AG, Trockenfilmschichtdicke 60 µm) versehen ist. Nach der üblichen Trocknung (60°C, 30 min) wird das beschichtete Blech zusätzlich für mehrere Stunden bei erhöhter Temperatur, z. B. 60 °C, gelagert und damit die Lackierung gealtert. Auf diesem Substrat wird eine Reparaturstelle simuliert, indem eine Durchschliffstelle bis zum Blech angefertigt wird (Durchmesser ≈ 5 cm). Diese Durchschliffstelle wird dabei so erzeugt, daß möglichst flach auslaufende Übergänge vom Metall zum Klarlack vorhanden sind.
Auf die so erzeugte Schadstelle wird ein handelsüblicher konventioneller Reparaturgrundfüller auf Basis isocyanatvernetzter hydroxylgruppenhaltiger Acrylate (AB 85-1122 der Firma BASF Lacke + Farben AG, Münster; Trockenfilmschichtdicke 70 µm) aufgebracht und durch Erhitzen auf 60°C während einer Zeit von 30 min getrocknet.
Die Schadstelle und die an die Schadstelle angrenzenden Teile der Altlackierung, die beim Beispritzen ebenfalls mit Lack versehen werden sollen (ein mindestens 1 cm breiter Streifen um die Schadstelle herum), werden mit Schleifpapier so angerauht, daß glatte Übergänge zur Altlackierung erzeugt werden.

1.2 Simulierung einer Schadstelle 2

Es wird analog zur Schadstelle 1 eine weitere Schadstelle 2 simuliert, die sich von der Schadstelle 1 nur dadurch unterscheidet, daß auf die erzeugte Durchschliffstelle statt des konventionellen Reparaturfüllers nun ein wäßriger Reparaturfüller auf Basis einer Acrylatdispersion (AB 76-1986 der Firma BASF Lacke + Farben AG, Münster; Trockenfilmschichtdicke 70 µm) aufgebracht und getrocknet wird.

2. Herstellung von wasserverdünnbaren Überzugsmitteln

2.1 Überzugsmittel 1 auf Polyurethanbasis

Analog zum Beispiel 3 der DE-OS 32 10 051 wird ein wäßriges Überzugsmittel 1 hergestellt, allerdings mit dem Unterschied, daß das Überzugsmittel kein Aluminiumpigment und auch kein Melaminharz enthält.
Die in dem Überzugsmittel 1 eingesetzte Polyurethandispersion wird, wie in der DE-OS 32 10 051 für die Polyurethandispersion 3 beschrieben, folgendermaßen hergestellt:

500 g eines Polypropylenglykols mit einer Hydroxylzahl von 112 werden bei 100 °C 1 Stunde im Vakuum entwässert. Bei 80 °C werden 262 g 4,4'-Dicyclohexylmethandiisocyanat zugegeben und bei 90 °C gerührt, bis der Isocyanatgehalt 5,47 Gew.-%, bezogen auf die Gesamteinwaage, beträgt.
Nach Abkühlen auf 60 °C wird eine Lösung von 33,5 g Dimethylolpropionsäure und 25 g Triethylamin in 200 g N-Methylpyrrolidon zugegeben und 1 Stunde bei 90 °C gerührt. Die so erhaltene Masse wird unter intensivem Rühren in 1650 g deionisiertes Wasser gegeben. Zu der entstandenen Dispersion werden nun unter Rühren innerhalb von 20 Minuten 40 g einer 15 %igen Hydrazinlösung gegeben. Die resultierende Dispersion hat einen Festkörpergehalt von 32 % und eine Auslaufzeit von 23 Sekunden im DIN-Becher 4.
Der verwendete wasserlösliche Polyester wird - wie in der DE-OS 32 10 051 beschrieben - folgendermaßen hergestellt:
In einem Reaktor, der mit einem Rührer, einem Thermometer und einer Füllkörperkolonne ausgestattet ist, werden 832 Gew.-Teile Neopentylglykol eingewogen und zum Schmelzen gebracht. Es werden 664 Gew.-Teile Isophthalsäure zugegeben. Unter Rühren wird so aufgeheizt, daß die Kolonnenkopftemperatur 100 °C nicht übersteigt. Es wird bei maximal 220 °C so lange verestert, bis eine Säurezahl von 8,5 erreicht ist.
Nach Abkühlen auf 180 °C werden 384 Gew.- Teile Trimellithsäureanhydrid zugegeben und weiter verestert, bis eine Säurezahl von 39 erreicht ist. Es wird mit 425 Gew.-Teilen Butanol verdünnt.

Das eingesetzte Verdickungsmittel wird analog DE-OS-32 10 051 folgendermaßen hergestellt: Paste eines Natrium-Magnesium-Fluor-Lithium-Silikats, 3 % in Wasser; zur Herstellung der Paste wird das Silikat mittels eines Dissolvers 30-60 Minuten in Wasser eingerührt und über Nacht stehengelassen. Am nächsten Tag wird noch einmal 10 bis 15 Minuten gerührt.

Zur Herstellung des Überzugsmittels 1 werden analog zu Beispiel 3 der DE-OS 32 10 051 25 Teile des obenbeschriebenen Verdickungsmittels unter Rühren mit 25 Teilen der obenbeschriebenen Polyurethandispersion (32 % Festkörper) versetzt. Unter weiterem Rühren werden 5 Teile des obenbeschriebenen Polyesterharzes (80 % Festkörper), 0,5 Teile Dimethylethanolamin (10 %ig in Wasser), 5 Teile Butylglykol und 32,5 Teile Wasser zugegeben. Nachdem 30 Minuten gerührt worden ist, wird mit Wasser eine Auslaufzeit von 16 bis 25 s im DIN 4-Becher eingestellt.

2.2 Überzugsmittel 2 auf Polyurethanbasis

Analog zum Beispiel 5 der DE-OS 32 10 051 wird ein wäßriges Überzugsmittel 2 hergestellt, allerdings mit dem Unterschied, daß das Überzugsmittel kein Aluminiumpigment und auch kein Melaminharz enthält.
Die in dem Überzugsmittel 2 eingesetzte Polyurethandispersion wird analog zur Polyurethandispersion 5 der DE-OS 32 10 051 folgendermaßen hergestellt:
650 g eines handelsüblichen Polyethers aus Tetrahydrofuran mit einer Hydroxylzahl von 173 werden bei 100 °C 1 Stunde im Vakuum entwässert. Bei 80 °C werden 533 g Isophorondiisocyanat zugegeben und bei 90 °C gerührt, bis der Isocyanatgehalt 9,88 Gew.-%, bezogen auf die Gesamteinwaage, beträgt. Nach Abkühlen auf 60 °C wird eine Lösung von 93 g Dimethylolpropionsäure und 70 g Triethylamin in 400 g N-Methylpyrrolidon zugegeben und 1 Stunde bei 90 °C gerührt. Die so erhaltene Polyurethanmasse wird unter intensivem Rühren in 4700 g kaltes deionisiertes Wasser eingerührt. Zu der entstandenen Dispersion werden nun 120 g einer 15 %igen Hydrazinlösung innerhalb von 20 Minuten zugegeben. Die resultierende Dispersion hat einen Festkörpergehalt von 19 % und eine Auslaufzeit von 27 Sekunden im DIN-Becher 4.

Das eingesetzte Acrylatharz wird folgendermaßen hergestellt:
In einen Reaktionskessel mit Rührer, Thermometer und Rückflußkühler werden 400 Gew.-Teile n-Butanol eingewogen und auf 110 °C erhitzt. Dann werden aus einem Zulaufgefäß ein Gemisch von 1000 Gew.-Teilen n-Butylmethacrylat, 580 Gew.- Teilen Methylmethacrylat, 175 Gew.-Teilen 2-Hydroxyethylacrylat und 175 Gew.-Teilen Acrylsäure und aus einem zweiten Zulaufgefäß eine Mischung aus 80 Gew.-Teilen t-Butylperbenzoat und 80 Gew.-Teilen n-Butanol innerhalb von 4 Stunden gleichmäßig und gleichzeitig in den Reaktionskessel dosiert. Dabei wird die Temperatur bei 110 °C gehalten. Nach dem Zulauf wird bei 110 °C weiter polymerisiert und nach 1 Stunde wird eine Mischung von 10 Gew.-Teilen t-Butylperbenzoat und 10 Gew.-Teilen n-Butanol zugegeben. Nach weiteren 1,5 Stunden wird eine Polymerisatlösung erhalten, die einen Festkörper von 79,7 Gew.-%, eine Säurezahl von 64,0, bezogen auf den Festkörpergehalt, und eine Viskosität von 850 mPas gemessen im Platte-KegelViskosimeter bei einem Festkörpergehalt von 60 Gew.-% in n-Butanol hat.
Als Verdickungsmittel wird eine Paste eines Natrium-Magnesium-Silikats mit Schichtstruktur, 3 %ig in Wasser eingesetzt.

Zur Herstellung des Überzugsmittels 2 werden analog zu Beispiel 5 der DE-OS 32 10 051 25 Teile des obenbeschriebenen Verdickungsmittels unter Rühren mit 30 Teilen der obenbeschriebenen Polyurethandispersion (19 % Festkörper) versetzt. Unter weiterem Rühren werden 6 Teile des obenbeschriebenen Acrylatharzes (80 % Festkörper), 0,5 Teile Dimethylethanolamin (10 %ig in Wasser), 5 Teile Butylglykol und 26,5 Teile Wasser zugegeben. Nachdem 30 Minuten gerührt worden ist, wird mit Wasser eine Auslaufzeit von 16 bis 25 s im DIN 4 Becher eingestellt.

2.3 Überzugsmittel 3 auf Basis eines Emulsionspolymers

Zunächst wird eine Emulsionspolymerdispersion 1 folgendermaßen hergestellt:
In einem zylindrischen Glasdoppelwandgefäß mit Rührer, Rückflußkühler, rührbarem Zulaufgefäß, Tropftrichter und Thermometer werden 1344 g deionisiertes Wasser und 12 g einer 30 %igen wäßrigen Lösung des Ammoniumsalzes des Penta(ethylenglykol)nonylphenylethersulfats (Fenopon® EP 110 der GAF Corp., Emulgator 1) vorgelegt und auf 82°C aufgeheizt. Im rührbaren Zulaufgefäß wird aus 720 g deionisiertem Wasser, 24 g Emulgator 1, 10,8 g Acrylamid, 864 g Methylmethacrylat und 216 g n-Butylmethacrylat eine Emulsion hergestellt. 30 Gew.-% dieser Emulsion werden zur Vorlage gegeben. Dann werden 28 Gew.-% einer Lösung von 3,1 g Ammoniumperoxodisulfat (APS) in 188 g deionisiertem Wasser innerhalb von 5 Minuten zugetropft. Es tritt eine exotherme Reaktion ein. Die Reaktionstemperatur wird zwischen 82 und 88°C gehalten. 15 Minuten nach Beendigung der Zugabe der Ammoniumperoxodisulfatlösung werden die restlichen 70 Gew.-% der Emulsion zusammen mit den restlichen 72 Gew.-% der Ammoniumperoxodisulfatlösung innerhalb einer Stunde zugegeben, wobei die Temperatur bei 85°C gehalten wird. Danach wird auf 82°C abgekühlt und innerhalb von 2 Stunden werden eine Mischung aus 842 g n-Butylacrylat, 108 g Hydroxipropylmethacrylat, 43 g Methylmethacrylat, 43,2 g Methacrylsäure, 32,4 g Acrylamid und 5,4 g Eikosa(ethylenglykol)nonylphenylether (Antarox® CO 850 der GAF Corp., Emulgator 2) sowie 343 g deionisiertes Wasser zugegeben. Nach Beendigung der Zugabe wird die Reaktionsmischung noch für 1,5 Stunden bei 85° C gehalten. Danach wird abgekühlt und die Dispersion über ein Gewebe mit 30 μm Maschenweite gegeben. Man erhält eine feinteilige Dispersion mit einem nichtflüchtigen Anteil von 45 Gew.-%, einem pH-Wert von 3,4, einer Säurezahl von 13 mg KOH/g und einer OH-Zahl von 20 mg KOH/g.

Zur Herstellung des Überzugsmittels 3 werden 50 g der Emulsionspolymerdispersion 1 mit Ammoniak auf einen pH-Wert von 6,9 eingestellt und mit 9,4 g einer 3,5 %igen Lösung eines handelsüblichen Polyacrylsäureverdickers (Viscalex® HV 30 der Firma Allied Colloids, pH-Wert: 8,0) sowie 0,5 g eines handelsüblichen Entschäumers (BYK® 035) versetzt.
Die erhaltene Mischung wird ggf. durch Zusatz einer 25 %igen wäßrigen Ammoniaklösung auf einen pH-Wert von 7,0 eingestellt. Zu dieser Mischung wird 60 g einer vorgequollenen wäßrigen Paste, enthaltend 2 Gew.-% eines anorganischen Natrium-Magnesium-Schichtsilikat-Verdickungsmittels und 2 Gew.-%, bezogen auf das Gewicht der Paste, Polypropylenglykol (zahlenmittleres Molekulargewicht = 900) unter Rühren zugesetzt. Anschließend wird die Viskosität durch Zugabe von deionisiertem Wasser auf eine Auslaufzeit von 16-25 s im DIN 4-Becher eingestellt.

2.4 Überzugsmittel 4 auf Basis eines Emulsionspolymers

Zunächst wird eine Emulsionspolymerdispersion 2 folgendermaßen hergestellt:
In einem zylindrischen Glasdoppelwandgefäß mit Rührer, Rückflußkühler, rührbarem Zulaufgefäß, Tropftrichter und Thermometer werden 1344 g deionisiertes Wasser und 12 g einer 40 %igen wäßrigen Lösung des Ammoniumsalzes des Penta(ethylenglykol)nonylphenylethersulfats (Fenopon® EP 110 der GAF Corp., Emulgator 1) vorgelegt und auf 80°C aufgeheizt. Im rührbaren Zulaufgefäß wird aus 720 g deionisiertem Wasser, 24 g Emulgator 1, 10,8 g Acrylamid, 518 g Methylmethacrylat, 292 g n-Butylmethacrylat und 205 g Styrol eine Emulsion hergestellt. 30 Gew.-% dieser Emulsion werden zur Vorlage gegeben. Dann wird eine Lösung von 0,9 g Ammoniumperoxodisulfat (APS) in 55 g deionisiertem Wasser innerhalb von 5 Minuten zugetropft. Es tritt eine exotherme Reaktion ein. Die Reaktionstemperatur wird zwischen 80 und 85°C gehalten. 15 Minuten nach Beendigung der Zugabe der obengenannten APS-Lösung werden eine Lösung von 2,2 g APS in 480 g Wasser innerhalb von 3 Stunden und die restlichen 70 Gew.-% der obengenannten Emulsion innerhalb von einer Stunde zugegeben, wobei die Reaktionstemperatur bei 80°C gehalten wird.
Nach Beendigung der Zugabe der Emulsion wird auf 77°C abgekühlt und innerhalb von 2 Stunden eine Mischung aus 745 g n-Butylacrylat, 119 g Methylmethacrylat, 108 g Hydroxipropylmethacrylat, 54 g Styrol, 42,7 g Ethylhexylacrylat, 42,7 g Methacrylsäure, 21,6 g Acrylamid und 2,2 g Emulgator 2 zugegeben.

Nach Beendigung der Zugabe wird die Reaktionsmischung noch für 1,5 Stunden bei 80°C gehalten. Danach wird abgekühlt und die Dispersion über ein Gewebe mit 30 µm Maschenweite gegeben. Man erhält eine feinteilige Dispersion mit einem nichtflüchtigen Anteil von 45 Gew.-%, einen pH-Wert von 3,8, einer Säurezahl von 13 mg KOH/g und einer OH-Zahl von 19 mg KOH/g.

Die Herstellung des Überzugsmittels 4 erfolgt analog zur Herstellung des Überzugsmittels 3 mit dem einzigen Unterschied, daß statt 50 g der Emulsionspolymerdispersion 1 nun 50 g der Emulsionspolymerdispersion 2 eingesetzt werden.

2.5 Überzugsmittel 5 auf Polyurethanbasis

Zunächst wird folgendermaßen eine Polyurethandispersion 3 hergestellt:
In einem geeigneten Reaktionsgefäß mit Rührer, Rückflußkühler und Zulaufgefäß werden unter Schutzgas 686,3 g eines Polyesters mit einem zahlenmittleren Molekulargewicht von 1400 auf Basis einer handelsüblichen ungesättigten Dimerfettsäure (mit einer Jodzahl von 10 mg $J_2$/g, einem Monomergehalt von maximal 0,1 %, einem Trimergehalt von maximal 2 %, einer Säurezahl von 195 bis 200 mg KOH/g und einer Verseifungszahl von 197 bis 202 mg KOH/g), Isophthalsäure und Hexandiol vorgelegt und nacheinander mit 10,8 g Hexandiol, 55,9 g Dimethylolpropionsäure, 344,9 g Methylethylketon und 303,6 g 4,4'-Di-(isocyanatocyclohexyl)methan versetzt. Diese Mischung wird so lange unter Rückfluß gehalten, bis der Isocyanatgehalt auf 1,0 % abgesunken ist. Anschließend werden dem Gemisch 26,7 g Trimethylolpropan zugegeben und bis zu einer Viskosität von 1 2 dPas (bei einer Anlösung von 1:1 = Harzlösung/N-Methylpyrrolidon) unter Rückfluß gehalten.

Durch Zugabe von 47,7 g Butylglykol wird eventuell vorhandenes überschüssiges Isocyanat vernichtet. Anschließend werden dem Reaktionsgemisch 32,7 g Dimethylethanolamin, 2688,3 g entionisiertes Wasser und 193,0 g Butylglykol unter starkem Rühren zugegeben. Nach dem Entfernen des Methylethylketons mittels Vakuumdestillation erhält man eine Dispersion mit einem Feststoffgehalt von ca. 27 %.

Zur Herstellung des Überzugsmittels 5 werden 25 Teile des obenbeschriebenen Verdickungsmittels unter Rühren mit 30 Teilen der obenbeschriebenen Polyurethandispersion 3 (27 % Festkörper) versetzt.
Unter weiterem Rühren werden 6 Teile des unter 2.2 beschriebenen Acrylatharzes (80 % Festkörper), 0,5 Teile Dimethylethanolamin (10 %ig in Wasser), 5 Teile Butylglykol und 26,5 Teile Wasser zugegeben. Nachdem 30 min. gerührt worden ist, wird mit Wasser eine Auslaufzeit von 16 bis 25 s im DIN-4-Becher eingestellt.

3. Herstellung von wäßrigen Basisbeschichtungszusammensetzungen

3.1 Basisbeschichtungszusammensetzung 1

Es wird analog zu Beispiel 3 der DE-OS 32 10 051 eine Basisbeschichtungszusammensetzung 1 folgendermaßen hergestellt:
25 Teile des in 2.1 beschriebenen Verdickungsmittels werden unter Rühren mit 25 Teilen der in 2.1 beschriebenen Polyurethandispersion (32 % Festkörper) versetzt. Unter weiterem Rühren werden 5 Teile des in 2.1 beschriebenen Polyesterharzes (80 % Festkörper), 0,5 Teile Dimethylethanolamin (10 %ig in Wasser), 2 Teile eines handelsüblichen methanolveretherten Melamin-Formaldehydharzes (Festkörpergehalt 70 % in Wasser), 5 Teile einer handelsüblichen Aluminium-Pigmentpaste (Aluminiumgehalt 60 bis 65 %, durchschnittlicher Teilchendurchmesser 10 μm), 5 Teile Butylglykol und 32,5 Teile Wasser zugegeben.
Nachdem 30 Minuten gerührt worden ist, wird mit Wasser eine Auslaufzeit von 16 bis 25 s im DIN-4-Becher eingestellt.

3.2 Basisbeschichtungszusammensetzung 2

Es wird analog zu Beispiel 5 der DE-OS 32 10 051 eine Basisbeschichtungszusammensetzung 2 folgendermaßen hergestellt:
25 Teile des in 2.2 beschriebenen Verdickungsmittels werden unter Rühren mit 30 Teilen der in 2.2 beschriebenen Polyurethandispersion (19 % Festkörper) versetzt. Unter weiterem Rühren werden 6 Teile des in 2.2 beschriebenen Acrylatharzes (80 % Festkörper), 0,5 Teile Dimethylethanolamin (10 %ig in Wasser), 2 Teile eines handelsüblichen methanolveretherten Melamin-Formaldehydharzes (Festkörpergehalt 70 % in Wasser), 5 Teile einer handelsüblichen Aluminiumpigmentpaste (Aluminiumgehalt 60 bis 65 %, durchschnittlicher Teilchendurchmesser 10 μm), 5 Teile Butylglykol und 26,5 Teile Wasser zugegeben.
Nachdem 30 Minuten gerührt worden ist, wird mit Wasser eine Auslaufzeit von 16 bis 25 s im DIN 4-Becher eingestellt.

3.3 Basisbeschichtungszusammensetzung 3

Die Basisbeschichtungszusammensetzung 3 wird folgendermaßen hergestellt:
8,0 g Butylglykol und 4,5 g einer Aluminiumbronze gemäß DE-OS-36 36 183 (Aluminiumgehalt: 60 bis 65 Gew.-%) werden mit einem Schnellrührer 15 Minuten bei 300-500 U/min gerührt. Es wird eine Mischung 1 erhalten.

50 g der in 2.3 beschriebenen Emulsionspolymerdispersion 1 werden mit Ammoniak auf einen pH-Wert von 6,9 eingestellt und mit 9,4 g einer 3,5 %igen Lösung eines handelsüblichen Polyacrylsäureverdickers (Viscalex® HV 30 der Firma Allied Colloids, pH-Wert: 8,0) sowie 0,5 g eines handelsüblichen Entschäumers (BYK® 035) versetzt. Es wird die Mischung 2 erhalten. Zur Herstellung der erfindungsgemäßen Basislacke werden die Mischungen 1 und 2 30 Minuten bei 800-1000 U/min gemischt und danach ggf. durch Zusatz einer 25 %igen wäßrigen Ammoniaklösung auf einen pH-Wert von 7,0 eingestellt. Zu dieser Mischung wird 60 g einer vorgequollenen wäßrigen Paste, enthaltend 2 Gew.-% eines anorganischen Natrium-Magnesium-Schichtsilikat-Verdickungsmittels und 2 Gew.-%, bezogen auf das Gewicht der Paste, Polypropylenglykol (zahlenmittleres Molekulargewicht = 900) unter Rühren zugesetzt. Anschließend wird die Viskosität durch Zugabe von deionisiertem Wasser auf eine Auslaufzeit von 16-25 s im DIN 4-Becher eingestellt.

3.4 Basisbeschichtungszusammensetzung 4

Die Basisbeschichtungszusammensetzung 4 wird analog zur Basisbeschichtungszusammensetzung 3 hergestellt, mit dem einzigen Unterschied, daß statt 50 g der Emulsionspolymerdispersion 1 nun 50 g der in 2.4 beschriebenen Emulsionspolymerdispersion 2 eingesetzt werden.

3.5 Basisbeschichtungszuammensetzung 5

25 Teile des in 2.2 beschriebenen Verdickungsmittels werden unter Rühren mit 30 Teilen der in 2.5 beschriebenen Polyurethandispersion (27 % Festkörper) versetzt. Unter weiterem Rühren werden 6 Teile des in 2.2 beschriebenen Acrylatharzes (80 % Festkörper), 0,5 Teile Dimethylethanolamin (10 %ig in Wasser), 2 Teile eines handelsüblichen methanolveretherten Melamin-Formaldehydharzes (Festkörpergehalt 70 % in Wasser), 5 Teile einer handelsüblichen Aluminiumpigmentpaste (Aluminiumgehalt 60 bis 65 %, durchschnittlicher Teilchendurchmesser 10 μm), 5 Teile Butylglykol und 26,5 Teile Wasser zugegeben. Nachdem 30 Minuten gerührt worden ist, wird mit Wasser eine Auslaufzeit von 16 bis 25 s im DIN 4-Becher eingestellt.

4. Eingesetzte Deckbeschichtungszusammensetzungen

4.1 Klarlack 1

Es wird der handelsübliche 2-Komponenten-Klarlack auf Basis isocyanatvernetzter hydroxylgruppenhaltiger Acrylate (AF 23-0185 plus SC 29-0173 plus SV 41-0391 der Firma BASF Lacke + Farben AG, Münster; Mischungsverhältnis 2 : 1 : 0,6) eingesetzt.

4.2 Klarlack 2

Es wird ein handelsüblicher, überverdünnter 2-Komponenten-Klarlack 2 eingesetzt, der sich vom Klarlack 1 nur durch das Mischungsverhältnis der Bestandteile unterscheidet. Das Mischungsverhältnis des Klarlackes 2 beträgt 2 : 1 : 27.

Beispiele 1 bis 4

Die in 1 beschriebene Schadstelle 1 bzw. 2 wird über die gefüllerte Fläche hinaus in den angeschliffenen Klarlack der Altlackierung hinein (in einem mindestens 1 cm breiten Streifen um die Schadstelle herum) mit den wäßrigen Überzugsmitteln 2.1 bis 2.4 mittels Spritzapplikation (Spritzpistole SATA jet, Düsenweite 1,4 mm, Spritzdruck 4 bar) lackiert. Hierbei soll eine gerade geschlossene Lackschicht mit niedriger Schichtstärke erzeugt werden. Die gemessenen Trokkenfilmschichtdicken dieser Überzugsschicht betrugen 5 µm. Die Überzugsmittel wurden bei den in Tabelle 1 angegebenen Bedingungen getrocknet. Danach werden die wäßrigen Basisbeschichtungszusammensetzungen 3.1 bis 3.4 aufgespritzt. (Spritzpistole Sata jet, Düsenweite 1,4 mm, Spritzdruck 2-3 bar). Diese wasserverdünnbaren Metallic-Basislacke werden an der Schadstelle deckend (Trockenfilmschichtdicke 15 µm) und auf die angrenzende, mit dem wäßrigen Überzugsmittel vorgespritzte Fläche auslaufend lackiert. Ein Überlappen der Basisschicht mit der unvorbehandelten Altlackierung muß vermieden werden, um eine Markierung im Randzonenbereich durch veränderte Orientierung der Metallpigmente zu vermeiden. Nach einer kurzen Ablüftzeit von 60 min im Falle der Basisbeschichtungszusammensetzungen 1 und 2 bzw. 30 min. im Falle der Basisbeschichtungszusammensetzungen 3 und 4 wird über die gesamte Reparaturfläche und über den Bereich des aufgebrachten wäßrigen Überzugsmittels hinaus in den Bereich der unvorbehandelten Altlackierung hinein der Klarlack auslaufend gespritzt. Durch die Applikation des Klarlacks über den Bereich der Basisschicht hinaus in die angrenzenden Teile wird eine gleichmäßige Oberflächenstruktur erhalten, so daß eine aufwendige Polierarbeit an der Schadstelle nicht mehr erforderlich ist. Der Klarlack wird dabei im Bereich der Schadstelle mit einer Trockenfilmschichtdicke von 60 µm aufgetragen. Nach einer kurzen Ablüftzeit von 5 min wird abschließend die Deckschicht bei 60°C 30 min getrocknet. Der jeweils resultierende Schichtaufbau sowie dessen Applikationseigenschaften sind in Tabelle 1 dargestellt. In allen Fällen wurde nach geeigneter Trocknung des wäßrigen Überzugsmittels eine hervorragende Ausbesserung der Schadstelle erhalten.
Insbesondere im Randzonenbereich (sowohl an der Grenze zwischen Reparaturfüller und Altlackierung als auch an der Grenze zwischen Basislack und wäßrigem Überzugsmittel der ersten Verfahrensstufe) wurden keine Farbtonveränderungen, keine Veränderungen des metallischen Effektes, keine Wolkenbildung u. ä. beobachtet. Die Farbtonangleichung an die Altlackierung ist sehr gut, außerdem treten keine Haftungsprobleme zwischen der Altlackierung und der Reparaturlackierung auf.

Vergleichsbeispiele 1 bis 3

Es wird analog zu den Beispielen 1 bis 4 gearbeitet, mit dem einzigen Unterschied, daß kein wäßriges Überzugsmittel appliziert wird, sondern der Basislack direkt auf die vorbereitete (mit Füller versehene) Schadstelle und die angrenzenden Bereiche aufgebracht wird. In allen Fällen war nur eine unzureichende Ausbesserung der Schadstelle möglich, da insbesondere im Übergangsbereich zwischen Basislack und Altlackierung Farbton- und vor allem Effektveränderungen auftraten.
Der jeweils resultierende Schichtaufbau sowie dessen Applikationseigenschaften sind in Tabelle 2 dargestellt.

Vergleichsbeispiele 4 und 5

Es wird analog zu den Beispielen 1 bis 4 gearbeitet, mit dem einzigen Unterschied, daß anstelle der wäßrigen Überzugsmittel der konventionelle, überverdünnte Klarlack 2 unter sonst gleichen Bedingungen über die Schadstelle hinaus appliziert wird. Auch hier war nur eine unzureichende Ausbesserung der Schadstelle möglich. Der jeweils resultierende Schichtaufbau sowie dessen Applikationseigenschaften sind in Tabelle 2 dargestellt.

Beispiel 5 und 6

Es wird analog zu den Beispielen 1 bis 4 gearbeitet, mit dem einzigen Unterschied, daß nun jeweils das Überzugsmittel 2.5 und der Basislack 3.5 eingesetzt wird.
Der jeweils resultierende Schichtaufbau sowie dessen Applikationseigenschaften sind in Tabelle 3 dargestellt. In allen Fällen wurde nach geeigneter Trocknung des wäßrigen Überzugsmittels eine hervorragende Ausbesserung der Schadstelle erhalten. Insbesondere im Randzonenbereich (sowohl an der Grenze zwischen Reparaturfüller und Altlackierung als auch an der Grenze zwischen Basislack und wäßrigem Überzugsmittel der ersten Verfahrensstufe) wurden keine Farbtonveränderungen, keine Veränderungen des metallischen Effektes, keine Wolkenbildung u. ä. beobachtet. Die Farbtonangleichung an die Altlackierung ist sehr gut, außerdem treten keine Haftungsprobleme zwischen der Altlackierung und der Reparaturlackierung auf.

Tabelle 1

| Beispiel | 1 | 2 | 3 | 4 |
|---|---|---|---|---|
| Schadstelle | 1 | 1 | 2 | 2 |
| Überz.-m.[1)] | 2.1 oder 2.2 | 2.3 oder 1.4 | 2.1 oder 2.2 | 2.3 oder 2.4 |
| Basisl.[2)] | 3.1 bis 3.4 | 3.1 bis 3.4 | 3.1 bis 3.4 | 3.1 bis 3.4 |
| Klarl.[3] | 4.1 | 4.1 | 4.1 | 4.1 |
| Übergang Füller/Altl.[4)] | i. O. | i. O. | i. O. | i. O. |
| Randzone Basisl./Überz.-m[5)] | | | | |
| A | i. O. | i. O. | i. O. | i. O. |
| B | n. i. O. | i. O. | n. i. O. | i. O. |

Erläuterungen zu Tabelle 1

1) jeweils eingesetzten wäßriges Überzugsmittel

2) jeweils eingesetzte wäßrige Basisbeschichtungszusammensetzung

3) jeweils eingesetzte Deckbeschichtungszusammensetzung

4) Übergang Füller/Altlackierung sowohl nach Trocknung des wäßrigen Überzugsmittels 10 min bei 80 °C als auch nach Trocknung des wäßrigen Überzugsmittels 10 min bei 20 °C : i. O. = in Ordnung, d.h. keine Markierung, keine Wolkenbildung o.ä.

5) Übergang Basisbeschichtungszusammensetzung/wäßriges Überzugsmittel nach unterschiedlicher Trocknung des wäßrigen Überzugsmittels:

A: Trocknung 10 min bei 80 °C
B: Trocknung 10 min bei 20 °C
i. O. = in Ordnung, d.h. keine Markierung, keine Wolkenbildung o.ä.
n.i.O. = nicht in Ordnung, d.h. Markierung der Randzone, Wolkenbildung o.ä.

Tabelle 2

| | V1 | V2 | V3 | V4 | V5 |
|---|---|---|---|---|---|
| Schadstelle | 1 | 2 | 2 | 1 | 2 |
| Überz.-m.[1)] | - | - | - | 4.2 | 4.2 |

Tabelle 2 (fortgesetzt)

| | V1 | V2 | V3 | V4 | V5 |
|---|---|---|---|---|---|
| Basisl.[2)] | 3.1 bis 3.4 | 3.1 oder 3.2 | 3.3 oder 3.4 | 3.1 bis 3.4 | 3.1 bis 3.4 |
| Klarl.[3] | 4.1 | 4.1 | 4.1 | 4.1 | 4.1 |
| Übergang Füller/Altl.[4)] | i.O. | n.i.O. | i.O. | i.O. | i.O. |
| Randzone Basisl./Überz.-m. bzw. Altl.[5)] | n.i.O. | n.i.O. | n.i.O. | n.i.O. | n.i.O. |

Erläuterungen zu Tabelle 2

1) jeweils eingesetztes wäßriges Überzugsmittel

2) jeweils eingesetzte wäßrige Basisbeschichtungszusammensetzung

3) jeweils eingesetzte Deckbeschichtungszusammensetzung

4) Übergang Füller/Altlackierung: i.O. = in Ordnung, d.h. keine Markierung, keine Wolkenbildung o.ä.; n.i.O. = nicht in Ordnung, d.h. Markierung der Randzone, Wolkenbildung o.ä.

5) Übergang Basisbeschichtungszusammensetzung/Altlackierung für die Vergleichsbeispiele 1 bis 3 sowie Übergang Basisbeschichtungszusammensetzung/Überzugsmittel 4.2 für die Vergleichsbeispiele 4 und 5:

i.O. = in Ordnung, d.h. keine Markierung, keine Wolkenbildung o.ä.
n.i.O. = nicht in Ordnung, d.h. Markierung der Randzone, Wolkenbildung o.ä.

Tabelle 3

| Beispiel | 5 | 6 |
|---|---|---|
| Schadstelle | 1 | 2 |
| Überz.-m.[1)] | 2.5 | 2.5 |
| Basisl.[2)] | 3.5 | 3.5 |
| Klarl.[3] | 4.1 | 4.1 |
| Übergang Füller/Altl.[4)] | i. O. | i. O. |
| Randzone Basisl./Überz.-m[5)] | | |
| A | i. O. | i. O. |
| B | n. i. O. | n. i. O. |

Erläuterungen zu Tabelle 3

1) jeweils eingesetztes waßriges Überzugsmittel

2) jeweils eingesetzte wäßrige Basisbeschichtungszusammensetzung

3) jeweils eingesetzte Deckbeschichtungszusammensetzung

4) Übergang Füller/Altlackierung sowohl nach Trocknung des wäßrigen Überzugsmittels 10 min bei 80 °C als auch nach Trocknung des wäßrigen Überzugsmittels 10 min bei 20 °C : i. O. = in Ordnung, d.h. keine Markierung, keine Wolkenbildung o.ä.

[5] Übergang Basisbeschichtungszusammensetzung/wäßriges Überzugsmittel nach unterschiedlicher Trocknung des wäßrigen Überzugsmittels:

A: Trocknung 10 min bei 80 °C
B: Trocknung 10 min bei 20 °C
i. O. = in Ordnung, d.h. keine Markierung, keine Wolkenbildung o.ä.
n.i.O. = nicht in Ordnung, d.h. Markierung der Randzone, Wolkenbildung o.ä.

## Patentansprüche

**1.** Verfahren zur Herstellung einer mehrschichtigen Reparaturlackierung, bei dem

1.) die Schadstelle für das Auftragen einer Reparaturlackierung durch Reinigen, Schleifen und ggf. Aufbringen eines Spachtel- und/oder Füllermaterials vorbereitet wird,

2.) auf die vorbereitete Schadstelle sowie auf den angrenzenden, mit der Altlackierung versehenen Flächen ein Überzugsmittel aufgebracht wird,

3.) aus dem in Stufe (2) aufgebrachten Überzugsmittel ein Polymerfilm gebildet wird,

4.) auf der so erhaltenen Überzugsschicht eine Metallpigmente und/oder Effektpigmente enthaltene Basisbeschichtungszusammensetzung mit einer derartigen Schichtdicke aufgebracht wird, daß die Basisschicht im Bereich der Schadstelle deckend und im angrenzenden, mit dem Überzugsmittel der Stufe (2) beschichteten Bereich der Altlackierung auslaufend ist,

5.) aus der in Stufe (4) aufgebrachten Zusammensetzung ein Polymerfilm gebildet wird,

6.) auf der so erhaltenen Basisschicht, auf den ggf. nicht mit einer Basisschicht überzogenen Teilen der Überzugsschicht der Stufe (2) und ggf. auf der angrenzenden Altlackierung eine geeignete transparente Deckbeschichtungszusammensetzung aufgebracht wird und anschließend

7.) die Deckschicht ggf. zusammen mit der Basisschicht und ggf. zusammen mit der in der Stufe (2) erhaltenen Überzugsschicht bei Temperaturen zwischen Umgebungstemperatur und 140 °C, bevorzugt bei Temperaturen von unter 100 °C und besonders bevorzugt bei Temperaturen von unter 80 °C getrocknet wird,
dadurch gekennzeichnet, daß

I.) in der Stufe (2) ein wäßriges Überzugsmittel, enthaltend

a) 5 bis 50 Gew.-%, bezogen auf das Gesamtgewicht des Überzugsmittels, mindestens eines wasserverdünnbaren oder wasserdispergierbaren filmbildenden Materials,

b) 0 bis 20 Gew.-%, bezogen auf das Gesamtgewicht des Überzugsmittels, mindestens eines organischen Lösungsmittels und

c) ggf. übliche Hilfs- und Zusatzstoffe,
aufgebracht wird, wobei die Trockenfilmschichtdicke dieses wäßrigen Überzugsmittels im Bereich der Schadstelle zwischen 2 und 50 µm beträgt und dieses wäßrige Überzugsmittel keine Metallpigmente und keine nichtmetallischen Effektpigmente enthält und

II.) in der Stufe (4) eine wäßrige Basisbeschichtungszusammensetzung aufgebracht wird.

**2.** Verfahren nach Anspruch 1, dadurch gekennzeichnet, daß das wäßrige Überzugsmittel der Stufe (2) im Bereich der Altlackierung auslaufend aufgebracht wird.

**3.** Verfahren nach Anspruch 2, dadurch gekennzeichnet, daß die Trockenfilmschichtdicke der Überzugsschicht der Stufe (2) in einem zwischen 1 cm und 1 m breiten Bereich der Altlackierung auf eine Trockenfilmschichtdicke von 0 µm abnimmt.

4. Verfahren nach einem der Ansprüche 1 bis 3, dadurch gekennzeichnet, die transparente Deckbeschichtungszusammensetzung in der Stufe (6) im angrenzenden Bereich der Altlackierung auslaufend aufgebracht wird.

5. Verfahren nach einem der Ansprüche 1 bis 3, daß die transparente Deckbeschichtungszusammensetzung in der Stufe (6) soweit in den angrenzenden Bereich der Altlackierung hinein aufgebracht wird, bis eine Begrenzung der Altlackierung erreicht wird.

6. Verfahren zur Herstellung einer mehrschichtigen Reparaturlackierung, bei dem

1.) die Schadstelle für das Auftragen einer Reparaturlackierung durch Reinigen, Schleifen und ggf. Aufbringen eines Spachtel und/oder Füllermaterials vorbereitet wird,

2.) auf die vorbereitete Schadstelle sowie auf den angrenzenden, mit der Altlackierung versehenen Flächen bis zum Erreichen einer Begrenzung der Altlackierung ein Überzugsmittel aufgebracht wird,

3.) aus dem in Stufe (2) aufgebrachten Überzugsmittel ein Polymerfilm gebildet wird,

4.) auf der so erhaltenen Überzugsschicht eine Metallpigmente und/oder Effektpigmente enthaltene Basisbeschichtungszusammensetzung aufgebracht wird,

5.) aus der in Stufe (4) aufgebrachten Zusammensetzung ein Polymerfilm gebildet wird,

6.) auf der so erhaltenen Basisschicht eine geeignete transparente Deckbeschichtungszusammensetzung aufgebracht wird und anschließend

7.) die Deckschicht ggf. zusammen mit der Basisschicht und ggf. zusammen mit der Überzugsschicht der Stufe (2) bei Temperaturen zwischen Umgebungstemperatur und 140 °C, bevorzugt bei Temperaturen von unter 100 °C und besonders bevorzugt bei Temperaturen von unter 80 °C getrocknet wird,
dadurch gekennzeichnet, daß

I.) in der Stufe (2) ein wäßriges Überzugsmittel, enthaltend

a) 5 bis 50 Gew.-%, bezogen auf das Gesamtgewicht des Überzugsmittels, mindestens eines wasserverdünnbaren oder wasserdispergierbaren filmbildenden Materials,

b) 0 bis 20 Gew.-%, bezogen auf das Gesamtgewicht des Überzugsmittels, mindestens eines organischen Lösungsmittels und

c) ggf. übliche Hilfs- und Zusatzstoffe,
aufgebracht wird, wobei die Trockenfilmschichtdicke dieses wäßrigen Überzugsmittels zwischen 2 und 50 µm liegt und dieses wäßrige Überzugsmittel keine Metallpigmente und keine nichtmetallischen Effektpigmente enthält und

II.) in der Stufe (4) eine wäßrige Basisbeschichtungszusammensetzung aufgebracht wird.

7. Verfahren nach Anspruch 6, dadurch gekennzeichnet, daß das in der Stufe (2) aufgebrachte wäßrige Überzugsmittel farbgebende Pigmente, ausgenommen Metallic- und Effektpigmente, enhält.

8. Verfahren nach einem der Ansprüche 1 bis 7, dadurch gekennzeichnet, daß das in Stufe (2) aufgebrachte Überzugsmittel und/oder die Basisbeschichtungszusammensetzung als filmbildendes Material ein Emulsionspolymer enthalten, welches dadurch erhältlich ist, daß

(a) in einer ersten Stufe 10 bis 90 Gewichtsteile eines ethylenisch ungesättigten Monomeren oder eines Gemisches aus ethylenisch ungesättigten Monomeren in wäßriger Phase in Gegenwart eines oder mehrerer Emulgatoren und eines oder mehrerer radikalbildender Initiatoren polymerisiert werden, wobei das ethylenisch ungesättigte Monomer bzw. das Gemisch aus ethylenisch ungesättigten Monomeren so ausgewählt wird, daß in der ersten Stufe ein Polymer mit einer Glasübergangstemperatur ($T_{G1}$) von +30 bis +110 °C erhalten wird und,

(b) nachdem mindestens 80 Gew.-% des in der ersten Stufe eingesetzten ethylenisch ungesättigten Monomers bzw. Monomerengemisches umgesetzt worden sind, in einer zweiten Stufe 90 bis 10 Gewichtsteile eines ethylenisch ungesättigten Monomeren oder eines Gemisches aus ethylenisch ungesättigten Monomeren in Gegenwart des in der ersten Stufe erhaltenen Polymers polymerisiert werden, wobei das in der zweiten Stufe eingesetzte Monomer bzw. das in der zweiten Stufe eingesetzte Gemisch aus ethylenisch ungesättigten Monomeren so ausgewählt wird, daß eine alleinige Polymerisation des in der zweiten Stufe eingesetzten Monomers bzw. des in der zweiten Stufe eingesetzten Gemisches aus ethylenisch ungesättigten Monomeren zu einem Polymer mit einer Glasübergangstemperatur ($T_{G2}$) von -60 bis +20 °C führen würde und wobei die Reaktionsbedingungen so gewählt werden, daß das erhaltene Emulsionspolymer eine zahlenmittlere Molmasse von 200.000 bis 2.000.000 aufweist, und wobei das in der ersten Stufe eingesetzte ethylenisch ungesättigte Monomer bzw. Monomerengemisch und das in der zweiten Stufe eingesetzte ethylenisch ungesättigte Monomer bzw. Monomerengemisch in Art und Menge so ausgewählt werden, daß das erhaltene Emulsionspolymer eine Hydroxylzahl von 2 bis 100 aufweist und die Differenz $T_{G1}$ - $T_{G2}$ 10 bis 170 °C beträgt.

**9.** Verfahren nach Anspruch 8, dadurch gekennzeichnet, daß das in der Stufe (2) aufgebrachte Überzugsmittel und/oder die Basisbeschichtungszusammensetzung als filmbildendes Material eine Mischung aus weniger als 100 bis zu 40 Gew.-% des Emulsionspolymeren und bis zu 60 Gew.-% eines wasserverdünnbaren Polyurethanharzes enthalten, wobei sich die Mengenanteile jeweils auf den Festkörperanteil beziehen und ihre Summe stets 100 Gew.-% beträgt.

**10.** Verfahren nach einem der Ansprüche 1 bis 7, dadurch gekennzeichnet, daß das in der Stufe (2) aufgebrachte Überzugsmittel und/oder die Basisbeschichtungszusammensetzung als filmbildendes Material ein wasserverdünnbares oder wasserdispergierbares Polyurethanharz enthalten.

**11.** Verfahren nach einem der Ansprüche 1 bis 10, dadurch gekennzeichnet, daß die Schadstelle in der Stufe (1) durch Aufbringen eines wäßrigen Spachtel- und/oder Füllermaterials vorbereitet wird.

## Claims

**1.** Multicoat refinishing process in which

1.) the area of damage is prepared for the application of a refinish paint system by cleaning, sanding and, if necessary, applying a surfacer and/or body filler,
2.) a coating material is applied to the prepared area of damage and to the adjacent original finish areas,
3.) a polymeric film is formed from the coating material applied in stage (2),
4.) a basecoat composition containing metallic and/or special-effect pigments is applied to the coating obtained in this way at such a film thickness that the basecoat hides the area of damage and tapers off in the adjacent region of the original finish coated with the coating material from stage (2),
5.) a polymeric film is formed from the composition applied in stage (4),
6.) a suitable transparent topcoat composition is applied to the basecoat obtained in this way, if necessary to the parts of the coating from stage (2) not coated with a basecoat and if necessary to the adjacent original finish, and then
7.) the topcoat, where appropriate together with the basecoat and where appropriate together with the coating obtained in stage (2) is dried at temperatures between room temperature and 140°C, preferably at temperatures below 100°C and particularly preferably at temperatures below 80°C,
characterized in that

I.) an aqueous coating material, containing

a) 5 to 50% by weight, based on the total weight of the coating material, of at least one water-thinnable or water-dispersible film-forming material,
b) 0 to 20% by weight, based on the total weight of the coating material, of at least one organic solvent and
c) conventional auxiliaries and additives, if appropriate,
is applied in stage (2), the dry film thickness of this aqueous coating material being between 2 and 50 µm in the region of the area of damage and this aqueous coating material containing no metallic pigments and no non-metallic special-effect pigments, and

II.) an aqueous basecoat composition is applied in stage (4).

**2.** Process according to Claim 1, characterized in that the aqueous coating material from stage (2) is applied to the area of original finish using the tapering-off technique.

**3.** Process according to Claim 2, characterized in that the dry film thickness of the coating from stage (2) diminishes to a dry film thickness of 0 μm in a region of the original finish between 1 cm and 1 m wide.

**4.** Process according to any one of Claims 1 to 3, characterized in that the transparent topcoat composition in stage (6) is applied in the adjacent region of the original finish by the tapering-off technique.

**5.** Process according to any one of Claims 1 to 3, characterized in that the transparent topcoat composition from stage (6) is applied extending into the adjacent region of the original finish until a boundary of the original finish is reached.

**6.** Multicoat refinishing process in which

1.) the area of damage is prepared for the application of a refinish paint system by cleaning, sanding and, if necessary, applying a surfacer and/or body filler,
2.) a coating material is applied to the prepared area of damage and to the adjacent original finish areas until a boundary of the original finish is reached,
3.) a polymeric film is formed from the coating material applied in stage (2),
4.) a basecoat composition containing metallic and/or special-effect pigments is applied to the coating obtained in this way,
5.) a polymeric film is formed from the composition applied in stage (4),
6.) a suitable transparent topcoat composition is applied to the basecoat obtained in this way, and then
7.) the topcoat, where appropriate together with the basecoat and where appropriate together with the coating obtained in stage (2), is dried at temperatures between room temperature and 140°C, preferably at temperatures below 100°C and particularly preferably at temperatures below 80°C,
characterized in that

I.) an aqueous coating material, containing

a) 5 to 50% by weight, based on the total weight of the coating material, of at least one water-thinnable or water-dispersible film-forming material,
b) 0 to 20% by weight, based on the total weight of the coating material, of at least one organic solvent and
c) conventional auxiliaries and additives, if appropriate,
is applied in stage (2), the dry film thickness of this aqueous coating material being between 2 and 50 μm and this aqueous coating material containing no metallic pigments and no non-metallic special-effect pigments, and II.) an aqueous basecoat composition is applied in stage (4).

**7.** Process according to Claim 6, characterized in that the aqueous coating material applied in stage (2) contains colouring pigments, except metallic and special-effect pigments.

**8.** Process according to any one of Claims 1 to 7, characterized in that the coating material applied in stage (2) and/or the basecoat composition contain as the film-forming material an emulsion polymer which can be obtained by

(a) polymerizing in a first stage 10 to 90 parts by weight of an ethylenically unsaturated monomer or a mixture of ethylenically unsaturated monomers in aqueous phase in the presence of one or more emulsifiers and one or more radical-forming initiators, the ethylenically unsaturated monomer or the mixture of ethylenically unsaturated monomers being chosen so that in the first stage a polymer is obtained having a glass transition temperature ($T_{G1}$) of +30 to +110°C, and
(b) after at least 80% by weight of the ethylenically unsaturated monomer or monomer mixture used in the first stage has reacted, polymerizing in a second stage 90 to 10 parts by weight of an ethylenically unsaturated monomer or a mixture of ethylenically unsaturated monomers in the presence of the polymer obtained in the first stage, the monomer used in the second stage or the mixture of ethylenically unsaturated monomers used in the second stage being chosen so that a sole polymerization of the monomer used in the second stage or

of the mixture of ethyl-enically unsaturated monomers used in the second stage furnishes a polymer having a glass transition temperature ($T_{G2}$) of -60 to +20°C, and the reaction conditions being chosen so that the resultant emulsion polymer has a number average molecular weight of 200,000 to 2,000,000, and the type and amount of the ethylenically unsaturated monomer or mixture of monomers used in the first stage and those of the ethylenically unsaturated monomer or mixture of monomers used in the second stage being chosen so that the resultant emulsion polymer has a hydroxyl value of 2 to 100 and the difference $T_{G1}$ - $T_{G2}$ is 10 to 170°C.

**9.** Process according to Claim 8, characterized in that the coating material applied in stage (2) and/or the basecoat composition contain as the film-forming material a mixture consisting of less than 100 down to 40% by weight of the emulsion polymer and up to 60% by weight of a water-thinnable polyurethane resin, the amounts in each case being based on the solids content and their sum always being 100% by weight.

**10.** Process according to any one of Claims 1 to 7, characterized in that the coating material applied in stage (2) and/or the basecoat composition contain as the film-forming material a water-thinnable or water-dispersible polyurethane resin.

**11.** Process according to any one of Claims 1 to 10, characterized in that the area of damage is prepared in stage (1) by applying an aqueous surfacer and/or body filler.

## Revendications

**1.** Procédé de préparation d'un enduit de laque de réparation multicouche, lors duquel

1.) on apprête la zone de détérioration pour l'application d'un enduit de laque de réparation par nettoyage, polissage et, le cas échéant, par application d'un matériau de mastic et/ou de charge,
2.) on applique, sur la zone de détérioration apprêtée ainsi que sur les surfaces avoisinantes, pourvues de l'ancien enduit de laque, un agent d'enduction,
3.) on forme, à partir de l'agent d'enduction appliqué dans l'étape (2), un film polymère,
4.) on applique, sur la couche d'enduction ainsi obtenue, une composition d'enduction de base contenant des pigments métalliques et/ou des pigments à effet d'une épaisseur de couche telle que la couche de base soit couvrante dans le domaine de la zone de détérioration et soit dégressive dans le domaine avoisinant, enduit de l'agent d'enduction de l'étape (2), de l'ancien enduit de laque,
5.) on forme, à partir de la composition appliquée dans l'étape (4), un film polymère,
6.) on applique, sur la couche de base ainsi obtenue, sur les parties de la couche d'enduction de l'étape (2) éventuellement non enduites d'une couche de base et, le cas échéant, sur l'ancien enduit de laque avoisinant, une composition d'enduction de finition transparente appropriée et ensuite,
7.) on procède au séchage de la couche de finition, le cas échéant conjointement à la couche de base et, le cas échéant, conjointement à la couche d'enduction obtenue dans l'étape (2), à des températures comprises entre la température ambiante et 140°C, de préférence à des températures en dessous de 100°C et particulièrement de préférence à des températures en dessous de 80°C,
caractérisé en ce que

I.) dans l'étape (2), on applique un agent aqueux d'enduction, contenant

a) de 5 à 50 % en poids, par rapport au poids total de l'agent d'enduction, d'au moins un matériau filmogène diluable à l'eau ou dispersible dans l'eau,
b) de 0 à 20 % en poids, par rapport au poids total de l'agent d'enduction, d'au moins un solvant organique et,
c) le cas échéant, des additifs et adjuvants usuels, l'épaisseur de couche de film sec de cet agent aqueux d'enduction étant, dans le domaine de la zone de détérioration, comprise entre 2 et 50 microns et cet agent aqueux d'enduction ne contenant pas de pigments métalliques ni de pigments à effet non-métalliques et,

II.) on applique, dans l'étape (4), une composition aqueuse d'enduction de base.

**2.** Procédé selon la revendication 1, caractérisé en ce que l'on applique de manière dégressive l'agent d'enduction aqueux de l'étape (2) dans le domaine de l'ancien enduit de laque.

3. Procédé selon la revendication 2, caractérisé en ce que l'épaisseur de couche de film sec de la couche d'enduction de l'étape (2) diminue, dans un domaine de l'ancien enduit de laque d'une largeur comprise entre 1 cm et 1 m, à une épaisseur de couche de film sec de 0 micron.

4. Procédé selon l'une quelconque des revendications 1 à 3, caractérisé en ce que l'on applique de manière dégressive la composition transparente d'enduction de finition dans l'étape (6) dans le domaine avoisinant de l'ancien enduit de laque.

5. Procédé selon l'une quelconque des revendications 1 à 3, caractérisé en ce que l'on applique la composition transparente d'enduction de finition dans l'étape (6) dans la domaine avoisinant de l'ancien enduit de laque de manière suffisamment étendue jusqu'à atteindre une délimitation de l'ancien enduit de laque.

6. Procédé de préparation d'un enduit de laque de réparation multicouche, lors duquel

1.) on apprête la zone de détérioration pour l'application d'un enduit de laque de réparation par nettoyage, polissage et, le cas échéant, par application d'un matériau de mastic et/ou de charge,
2.) on applique un agent d'enduction sur la zone de détérioration apprêtée ainsi que sur les surfaces avoisinantes, pourvues de l'ancien enduit de laque, jusqu'à atteindre une délimitation de l'ancien enduit de laque,
3.) on forme, à partir de l'agent d'enduction appliqué dans l'étape (2), un film polymère,
4.) on applique, sur la couche d'enduction ainsi obtenue, une composition d'enduction de base contenant des pigments métalliques et/ou des pigments à effet,
5.) on forme, à partir de la composition appliquée dans l'étape (4), un film polymère,
6.) on applique, sur la couche de base ainsi obtenue, une composition d'enduction de finition transparente appropriée, et ensuite,
7.) on procède au séchage de la couche de finition, le cas échéant conjointement à la couche de base et, le cas échéant, conjointement à la couche d'enduction de l'étape (2), à des températures entre la température ambiante et 140°C, de préférence à des températures en dessous de 100°C, et particulièrement de préférence à des températures en dessous de 80°C,
caractérisé en ce que

I.) dans l'étape (2) on applique un agent aqueux d'enduction, contenant

a) de 5 à 50 % en poids, par rapport au poids total de l'agent d'enduction, d'au moins un matériau filmogène diluable à l'eau ou dispersible dans l'eau,
b) de 0 à 20 % en poids, par rapport au poids total de l'agent d'enduction, d'au moins un solvant organique et
c) le cas échéant des additifs et adjuvants usuels, l'épaisseur de couche de film sec de cet agent aqueux d'enduction se situant dans le domaine compris entre 2 et 50 microns et cet agent aqueux d'enduction ne contenant pas de pigments métalliques ni de pigments à effet non-métalliques et

II.) on applique, dans l'étape (4), une composition aqueuse d'enduction de base.

7. Procédé selon la revendication 6, caractérisé en ce que l'agent d'enduction aqueux appliqué dans l'étape (2) contient des pigments chromophores à l'exception de pigments métalliques et de pigments à effet.

8. Procédé selon l'une quelconque des revendications 1 à 7, caractérisé en ce que l'agent d'enduction appliqué dans l'étape (2) et/ou la composition d'enduction de base contiennent, en tant que matériau filmogène, un polymère d'émulsion, que l'on peut obtenir en ce que

(a) l'on polymérise, dans une première étape, de 10 à 90 parts en poids d'un monomère éthyléniquement insaturé ou d'un mélange de monomères éthyléniquement insaturés en phase aqueuse en présence d'un ou de plusieurs émulsifiants et d'un ou de plusieurs agents initiateurs formant des radicaux, le monomère éthyléniquement insaturé, respectivement le mélange de monomères éthyléniquement insaturés étant choisi de sorte que l'on obtienne dans la première étape un polymère ayant une température de transition vitreuse ($T_{G1}$) de + 30 à + 110°C et en ce que,
(b) après avoir fait réagir au moins 80 % en poids du monomère éthyléniquement insaturé, respectivement du mélange de monomères, utilisé dans la première étape, l'on polymérise, dans une deuxième étape, de 90 à 10 parts en poids d'un monomère éthyléniquement insaturé ou d'un mélange de monomères éthyléniquement

insaturés en présence du polymère obtenu dans la première étape, le monomère utilisé dans la deuxième étape, respectivement le mélange de monomères éthyléniquement insaturés, utilisé dans la deuxième étape, étant choisi de sorte qu'une polymérisation unique du monomère utilisé dans la deuxième étape, respectivement du mélange de monomères éthyléniquement insaturés, utilisé dans la deuxième étape, conduise à un polymère ayant une température de transition vitreuse ($T_{G2}$) de - 60 à + 20°C et les conditions de réaction étant choisies de sorte que le polymère d'émulsion obtenu présente une masse molaire moyenne au nombre de 200 000 à 2 000 000, et le monomère utilisé dans la deuxième étape, respectivement le mélange de monomères, utilisé dans la première étape, et le monomère éthyléniquement insaturé, respectivement le mélange de monomères, utilisé dans la deuxième étape, étant choisis en nature et en quantité de sorte que le polymère d'émulsion obtenu présente un indice hydroxyle de 2 à 100 et que la différence $T_{G1}$ - $T_{G2}$ soit de 10 à 170°C.

**9.** Procédé selon la revendication 8, caractérisé en ce que l'agent d'enduction appliqué dans l'étape (2) et/ou la composition d'enduction de base contiennent en tant que matériau filmogène, un mélange de moins de 100 jusqu'à 40 % en poids du polymère d'émulsion et jusqu'à 60 % en poids d'une résine de polyuréthane diluable à l'eau, les proportions quantitatives se rapportant à chaque fois à la proportion de matières solides et leur somme étant en permanence égale à 100 %.

**10.** Procédé selon l'une quelconque des revendications 1 à 7, caractérisé en ce que l'agent d'enduction appliqué dans l'étape (2) et/ou la composition d'enduction de base contiennent, en tant que matériau filmogène, une résine polyuréthane diluable à l'eau ou dispersible dans l'eau.

**11.** Procédé selon l'une quelconque des revendications 1 à 10, caractérisé en ce que l'on apprête la zone de détérioration dans l'étape (1) par application d'un matériau aqueux de mastic et/ou de charge.